(19)

Europäisches
Patentamt
European
Patent Office
Office européen
des brevets

(11)  **EP 1 566 865 B1**

(12)  **EUROPEAN PATENT SPECIFICATION**

(45) Date of publication and mention
of the grant of the patent:
**21.04.2010  Bulletin 2010/16**

(51) Int Cl.:
***H01S 3/06*** *(2006.01)*    ***G02F 1/35*** *(2006.01)*
***H01S 3/23*** *(2006.01)*

(21) Application number: **05250977.5**

(22) Date of filing: **21.02.2005**

(54) **Slab type solid-state laser medium and slab type nonlinear optical medium each using light path formed by multiple reflection caused by three reflecting surfaces**

Plattenförmiges Festkörperlasermedium und plattenförmiges nichtlinear-optisches Medium in denen ein Lichtpfad durch mehrere Reflexionen an drei reflektierenden Oberflächen gebildet wird

Matériau laser à l'état solide en plaque et matériau optique non linéaire en plaque utilisant chacun une trajectoire formée par réflexions multiples sur trois surfaces réfléchissantes

(84) Designated Contracting States:
**DE FR GB IT**

(30) Priority: **19.02.2004  JP 2004043133**

(43) Date of publication of application:
**24.08.2005  Bulletin 2005/34**

(73) Proprietor: **National Institute of Information and Communications Technology, Incorporated Administrative Agency Koganei-shi, Tokyo (JP)**

(72) Inventor: **Ishizu, Mitsuo Koganei-shi Tokyo (JP)**

(74) Representative: **Smith, Norman Ian Cleveland 40-43 Chancery Lane London WC2A 1JQ (GB)**

(56) References cited:
**EP-A- 1 180 832**    **EP-A1- 0 878 881**
**US-A- 3 665 335**    **US-A- 5 249 196**

• **ROTH U ET AL: "Saturation, Gain, and Noise Properties of a Multipass Diode-Laser-Pumped Nd:YAG CW Amplifier" IEEE JOURNAL OF QUANTUM ELECTRONICS, IEEE SERVICE CENTER, PISCATAWAY, NJ, US, vol. 34, no. 10, October 1998 (1998-10), XP011052059 ISSN: 0018-9197**

**Description**

BACKGROUND OP THE INVENTION

Field of the Invention:

This invention relates to a solid-state laser medium using a light path formed by multiple reflection caused by three reflecting surfaces which is usable in a compact high-power solid-state laser device and to a nonlinear optical medium using a light path formed by multiple reflection caused by three reflecting surfaces which is small and capable of high conversion efficiency due to a nonlinear optical effect.

Description of the Prior Art:

The conversion efficiency from the electric power input to the light output of a solid laser device constitutes one of the most important properties of the laser. The conventional solid-state laser devices of the lamp excitation type and the laser diode (LD) excitation type have incurred the following problems.

1) The devices of the lamp excitation type are deficient in utilization efficiency of excitation light because the energy conversion efficiency of the lamp itself from electricity to light is low, the emission spectrum of the excitation lamp is wide and the spectrum ineffective in the laser operation is copious. These laser devices as a whole, therefore, are deficient in efficiency of energy utilization and necessitate a large electric power for obtaining a necessary amount of output as compared with the laser devices of the other excitation type.

2) The devices of the laser diode (LD) excitation type have a high conversion efficiency of the LD itself from electricity to light and are capable of allowing the emission spectrum to coincide with the absorption band of the laser rod and, consequently, possess a comparatively high utilization efficiency of excitation light and, as a laser device, acquire a higher conversion efficiency from an electrical energy to a laser beam.

It is well known that the devices of the LD excitation type have a comparatively high conversion efficiency of energy. These devices, however, possess a part which constitutes a bottleneck in the energy conversion from the excitation light to the laser beam as described herein below. By improving this part, it is made possible to further enhance the conversion efficiency of the laser devices.

The formation of the part constituting the bottleneck as described above is ascribable to the fact that the laser medium cannot completely absorb the excitation light efficiently because the active ions of the solid-state laser have a small cross section for absorbing the excitation light and the fact that the energy stored in the laser rod cannot completely be converted efficiently into the laser beam because the cross section of induced emission is small and the laser gain is consequently small.

Thus, by folding up the light path in the laser medium and elongating it for the purpose of exalting the conversion efficient of the laser device, it is made possible to increase the number of interactions between the laser beam or the excitation light and the laser active ions and add to the length of interactions as well, mend the characteristic property of small cross section of the laser active ions for the absorption of excitation light and small cross section of induced emission, and enable the energy stored in the laser medium to be converted into the laser beam with high efficiency.

One conventional method for exalting the efficiency of the laser device has consisted in increasing the amount of doping the solid-state laser medium with laser active ions. This method resides in exalting the excitation light absorbing rate and the laser gain by heightening the active ion concentration.

Further, U.S. Patent No. 3,640,887 and U.S. Patent No. 3,897,358 disclose methods for producing a ceramic laser medium containing rare earth ions, such as Nd, and characteristic properties of the products. Recently, the Nd: YAG ceramic has been demonstrated as a substance capable of increasing the doping amount of laser active ions more than that of a single crystal and has been being studied as a method for manufacturing a laser medium of a large size. The exaltation of the oscillating property of the Nd:YAG ceramic laser is mentioned in "Optical properties and laser characteristics of highly Nd3+-doped Y3Al5O12 ceramics," Applied Physics Letters, Vol. 77, No. 7, pp. 939-941 (2000) and "72W NO: Y3Al5O12 ceramic laser," Applied Physics Letters, Vol. 78, No. 23, pp. 3586-3588 (2001).

The increase of this doping level, however, tends to result in degrading the quality of the laser medium by disrupting the uniformity of the doping concentration and the refractive index distribution during the stage of manufacturing the laser medium and decreasing the life time of the ions at upper energy levels. The doping level of the laser active ions is limited because the degradation results in deteriorating the transverse mode of the laser beam and lowers the performance of the laser medium. Further, the laser medium in high power solid-state lasers derives thermal lens effect and birefringence from the thermal stress field in the laser medium due to the heating and cooling at difference sites and degrades the transverse mode of oscillation. The limit mentioned above arises because an effort to preclude the problem and obtain the fundamental transverse mode oscillation results in necessitating a decrease in the doping amount of the active ions in the laser medium with the object of lowering the density of heat generation, for example.

For the purpose of exalting the efficiency of the laser device by using a laser medium with a doping amount enough to secure the quality proper for the laser medium, the laser medium to be used requires a large ratio of absorption of the excitation light and a high laser gain enough to permit saturated amplification. For the purpose of adding to the ratio of absorption of the excitation light, the length of propagation of the excitation light in the laser rod must be amply greater than the length of absorption. As viewed simply, it is necessary to increase the volume of the laser medium to be excited. For the purpose of approximating the operation of the laser medium to the saturated amplification and obtaining the fundamental transverse mode oscillation, it is necessary that the excitation density of the laser medium be increased and the diameter of the oscillation mode be decreased to the extent of facilitating the selection of the fundamental transverse mode, namely the mode volume be decreased. Thus, these two conditions must be satisfied for the sake of exalting the energy conversion efficiency of the laser device. Since the exaltation of the excitation volume and the contraction of the mode volume are mutually contradicting conditions, however, the conformity of these conditions is difficult to achieve in the conventional laser medium through which the laser beam advances straight and passes singly.

The use of a multiplicity of light paths in the interior of the laser medium may be one method which is available for matching the conditions. By thus increasing the number of the light paths, it is made possible to separate the light paths for the laser beam little by little spatially so as to reciprocate them inside the laser medium and augment the excitation volume and the excitation light absorption rate as well. It is further made possible to decrease the cross section of the laser beam inside the laser medium to a greater extent than the total cross section of the laser medium and retain the mode volume in a decreased state. As a result, the length of the light path in the laser medium is the laser rod length multiplied by the number of repetitions in the light path and the laser gain can be augmented. Further by having the light paths disposed in many directions in the laser rod, it is made possible to diminish the influence of the lack of uniformity of the excitation distribution and the optical properties. Since the laser medium for use in the laser amplifier has the acquisition of the saturated amplification gain as a necessary condition for enabling the stored energy to be effectively converted into the laser beam, numerous methods for the of light paths have been devised to date.

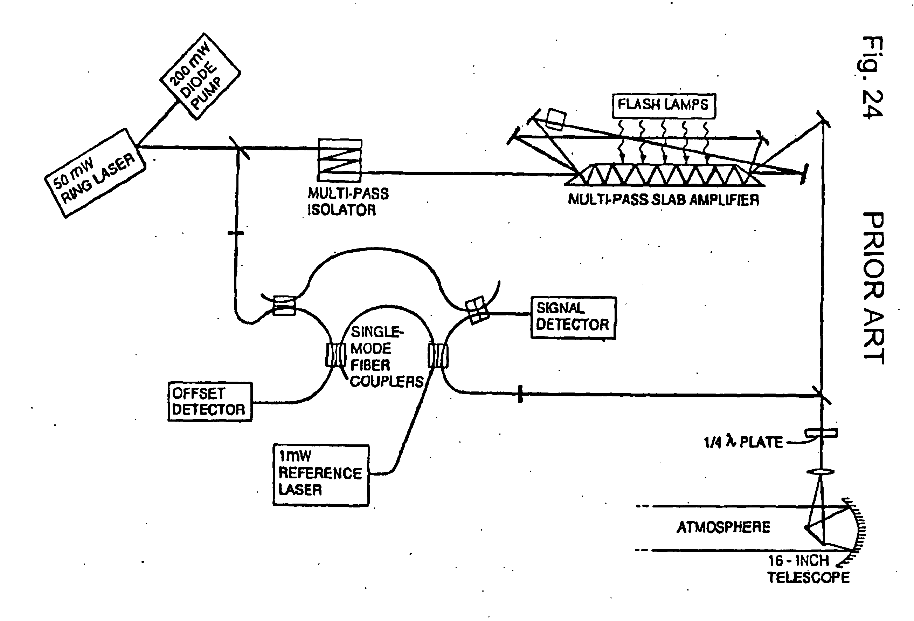

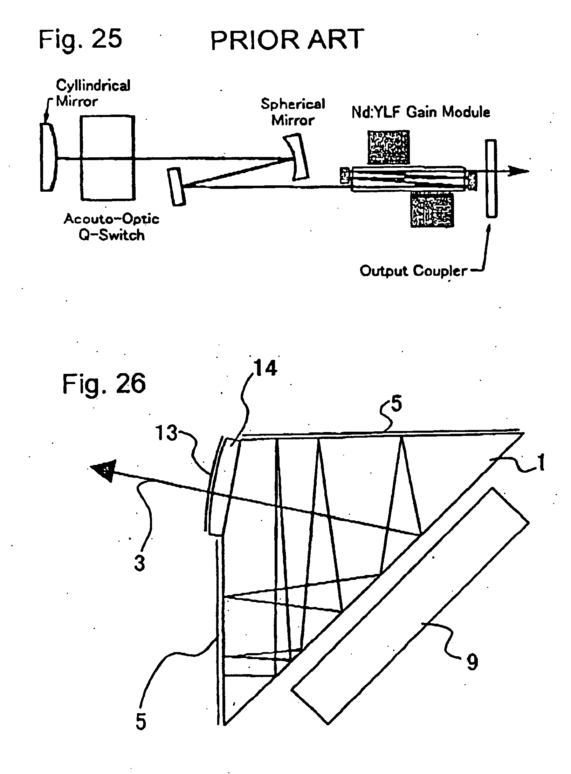

U.S. Patent No. 4,902,127 discloses a laser radar device which is composed of a reflecting mirror and a slab laser rod and furnished with a triple light path solid-state laser amplifier with an eye-safe wavelength (1,400 to 2,600 mm) as illustrated in FIG. 24. U.S. Patent No. 5,172,263 discloses a quadruple light path solid-state laser amplifier which is composed of a rectangular prism, a plane mirror and a laser rod. U.S. Patent No. 5,615,043 discloses a multiple light path laser amplifier which uses a confocal resonator applicable to any of solid-state laser, dye laser and gas laser or uses a white cell and a laser rod. U.S. Patent No. 5,751,472 discloses a multiple light path of a parametric oscillator or amplifier composed of a 180-degree folding right-angle prism, a lens, a reflecting mirror and a nonlinear crystal. U.S. Patent No. 5,872,804 gives an account of an eightfold light path laser amplifier which is formed of a wave plate, an optical rotator and a hexagonal shaped slab laser medium "Diode-pumped High-power CW and Mode-locked Nd:YLF Laser," Advanced Solid-State Lasers, 2000 TOPS Vol. 34, Optical Society of America, Washington D.C. (2000) reports an Nd:YLF laser which attains the exaltation of the comprehensive efficiency and the oscillation in the fundamental transverse mode by a method of disposing plane mirrors one each on the opposite sides of a laser medium and passing the laser beam five times inside the laser medium as illustrated in FIG. 25. These methods invariably materialize a multiple light path by using in at least part of a light path a reflecting component, such as a reflecting mirror or a reflecting prism, other than the laser medium.

These configurations, however, have been at a disadvantage in complicating the structure of a laser device and suffering the laser device to occupy a large size because they add to the number of optical components forming a multiple light pass and necessitate precise adjustment for the sake of necessary operation. The laser rod requires deposition of an antireflection coating to each of the end faces thereof. The incidence of the laser beam which has passed through the antireflection coating and the reflection on the reflecting member, such as a reflecting mirror or a reflecting prism, both never fail to entail an optical loss. This loss is accumulated when the laser beam reciprocates through the light path and the accumulated loss results in diminishing the effect of exalting the laser gain brought by means of the multiple light path. Further, the conventional multiple light path mentioned above has its direction changed only slightly in the linear light path sections and, therefore, is enabled to manifest a small effect of averaging which is brought by the passage through the regions having different excitation density and different temperature gradient within the laser medium. High conversion efficiency and a high output may be expected of the multiple light path so disposed as to fill up the excitation regions inside the laser rod. Such light paths, however, are at a disadvantage in rendering their configuration difficult to achieve.

The wavelength conversion devices for harmonic wave generation or optical mixing by the use of a nonlinear optical crystal and the parametric devices for effecting parametric oscillation and parametric amplification by the use of a parametric interaction, for example, advance the laser beam inside the nonlinear optical crystal. Generally, in the nonlinear optical crystal, the directions of propagation of the laser beam and the generated light and the direction of the plane of polarization are decided to satisfy phase matching conditions relative to the crystal axis. Basically, the components mentioned above, therefore, are manufactured to operate in a single-passage light path for rectilinear propagation or a one-reciprocation light path. Thus, they either fail to acquire satisfactory wavelength conversion efficiency or necessitate a powerful laser beam for the sake of obtaining a necessary output. In order to utilize these nonlinear effects with a high efficiency, the crystal is required to possess large nonlinear optical coefficients, uniform optical properties and large dimensions. It is not easy to produce a large uniform crystal

Conventional configuration has been at a disadvantage in complicating the structure of the laser device and suffering the device to occupy large dimensions because the number of optical components for forming the multiple light path increases and the device needs precise adjustment for the operation as expected. Further, the optical loss never fails to occur during the introduction of the laser beam which has passed through the antireflection coating on the end face of the laser rod or during the reflection on the reflecting component, such as a reflecting mirror or a reflecting prism. This optical loss has diminished the effect of augmenting the laser gain each time the laser beam reciprocates through the light path. The conventional configuration has been further at a disadvantage in failing to form a muhiple light path having light paths so extensively disposed as to fill up the interior of the laser rod because the multiplicity of light paths have their individual directions change only slightly.

This invention has been produced with a view to eliminating the disadvantages of the conventional device and is aimed at providing a solid-state laser medium which has set in the device a light path of a length far greater than the length of the laser medium.

In the wavelength conversion device and the nonlinear optical crystal for effecting parametric oscillation or amplification, the direction of propagation of the excitation light and the generated light and the direction of the plane of polarization are decided so as to satisfy phase matching conditions. The devices mentioned above, therefore, have been basically manufactured so as to operate in a single passage light path for rectilinear propagation or a one-reciprocation light path Thus, the wavelength conversion devices have been unable to acquire sufficient wavelength conversion efficiency. It otherwise has necessitated a powerful excitation light in order to obtain a necessary output. The utilization of such nonlinear effects with a high efficiency has necessitated a crystal which possesses large nonlinear optical coefficients, uniform optical properties and large dimensions.

This invention has another object of providing a solid-state laser medium which is capable of utilizing the nonlinear effects with a high efficiency without requiring use of a large crystal

EP 1180832 A describes a wedge-shaped micro-resonator and microlaser. An equilateral triangular laser medium is included and a path for a laser beam inside that medium involving reflections off the internal side faces of the triangle is shown.

Roth U et al: "Saturation, Gain, and Noise Properties of a Multipass Diode-Laser-Pumped Nd:YAG CW Amplifier" IEEE JOURNAL OF QUANTUM ELECTRONICS, vol. 34, no. 10, October 1998, describes various polygonal laser media and the use of paths for a laser beam inside the respective media involving reflections off the internal side faces of the respective polygons.

## SUMMARY OF THE INVENTION

According to one aspect the present invention provides a laser comprising a laser resonator arrangement and a slab type solid-state laser medium disposed in the laser resonator arrangement, which arrangement defines a position and direction of an incident resonant laser beam at the laser medium in use, the slab type solid-state laser medium being furnished on side faces thereof with three reflecting surfaces, and allowing therein a light path for optical amplification attained by multiple reflection on the reflecting surfaces, wherein the three reflecting surfaces comprise Surface C serving as a surface on which the incident laser beam reflects first in the solid-state laser medium, Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes an angle of intersection between Surface C and Surface A or extended surfaces thereof, **characterized in that**: Angle C is larger than each of Angle A and Angle B and the laser medium and laser resonator arrangement are together arranged so that, in use, the incident laser beam is injected into the solid-state laser medium so that the light path formed for optical amplification in the solid-state laser medium includes a plurality of consecutive unit reflections without interruption, each unit reflection comprising reflections on Surface C, Surface B, Surface C and Surface A sequentially in the order mentioned and in that the path followed inside the laser medium during at least one of the unit reflections is different from the path followed during at least one other of the unit reflections.

The solid-state laser medium may have, when Surface A, Surface B and Surface C have lengths so defined as to enable surfaces orthogonally intersecting the three rejecting surfaces provided on the side faces of the slab type solid-state laser medium to encircle an outer periphery of cut surfaces of the laser medium, a configuration that allows a first part for passing the laser beam to be provided in a region of a length of not more than half of the length of Surface A and a remaining region of Surface A to be used for a reflecting surface, allows a second part for passing the laser beam to be provided in a region of a length of not more than half of the length of Surface B and a remaining region of Surface B to be used for a reflecting surface, and allows the laser beam to be injected through the first or second part and to be emitted through the second or first part.

Optionally, the reflection on Surface C is total reflection, and the solid-state laser medium allows excitation light to be injected through Surface C.

Optionally, Surface A, Surface B or Surface C is covered with an antireflection coating serving as a film for passing excitation light and the solid-state laser medium is excited with the light which has passed through the antireflection film.

The laser medium may have:, near Angle A, Angle B or Angle C, Surface D or surface D and Surface E different from Surface A, Surface B and Surface C, wherein a portion of Surface A or Surface B cut off by Surface D or surface E has a length of not more than half of the length of Surface A or Surface B as viewed from a direction of a vertical plane of the solid-state laser medium and wherein the laser beam is injected, emitted or reflected through Surface D or Surface E.

Optionally, Surface D or Surface E is a flat or spherical surface, and Surface D is furnished with a slightly permeable membrane intended to serve as an output mirror of a laser resonator or Surface E is furnished with a highly reflective membrane intended to serve as an end mirror.

Optionally, Surface D is a flat surface, and a crystal plate including that of $Cr^{4+}$:YAG that is a saturable absorber of the laser beam is joined to the flat surface by diffusion bonding or optical contact and a slightly permeable membrane or a highly reflective membrane is attached to a surface opposite to the flat surface so as to serve as an output mirror or an end mirror for a laser resonator.

The solid-state laser media may be produced with a material resulting from doping any one of conventionally used solid-state laser media, particularly an isotropic optical medium or an anisotropic optical crystal including YAG, YLF, $YVO_4$, KGW, $Al_2O_3$. YSGG, GSGG, LSB, laser glass or $LiNbO_3$, with a solid-state laser active element.

According to another aspect the present invention also provides an optical arrangement comprising a laser and a slab type nonlinear optical device, the laser being arranged to provide an incident laser beam at the slab type nonlinear optical device, which is furnished on side faces thereof with three reflecting surfaces and allows therein a light path for nonlinear optical effects attained by multiple reflection on the reflecting surfaces, wherein the three reflection surfaces comprise Surface C serving as a surface on which the incident laser beam reflects first in the nonlinear optical device. Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes an angle of intersection between Surface C and Surface A or extended surfaces thereof, **characterized in that** Angle C is larger than each of Angle A and Angle B and the laser and the nonlinear optical device are together arranged so that, in use, the incident beam is injected into the nonlinear optical device so that the light path formed for nonlinear optical effects in the nonlinear optical device includes a plurality of consecutive unit reflections without interruption, each unit reflection comprising reflections on Surface C, Surface B, Surface C and Surface A sequentially in the order mentioned and in that the path followed inside the nonlinear optical device during at least one of the unit reflections is different from the path followed during at least one other of the unit reflections.

The nonlinear optical device may have, when Surface A, Surface B and Surface C have lengths so defined as to enable surfaces orthogonally intersecting the three reflecting surfaces provided on the side faces of the slab type nonlinear optical device to encircle an outer periphery of cut surfaces of the nonlinear optical device, a configuration that allows a first part for passing the laser beam to be provided in a region of a length of not more than half of the length of Surface A and a remaining region of Surface A to be used for a reflecting surface, allows a second part for passing the laser beam to be provided in a region of a length of not more than half of the length of Surface B and a remaining region of Surface B to be used for a reflecting surface, and allows the laser beam to be injected through the first or second part and to be emitted through the second or first part.

Optionally, Surface A, Surface B or Surface C has attached thereto a multilayer dielectric film destined to serve as a film for reflecting light having undergone wavelength conversion with the incident laser beam.

The slab type nonlinear optical device may have, near Angle A, Angle B or Angle C, Surface D or Surface D and Surface E different from Surface A. Surface B and Surface C, wherein a portion of Surface A or Surface B cut off by Surface D or Surface E has a length not more than half of the length of Surface A or Surface B as viewed from a direction of a vertical plane of the nonlinear optical device and wherein the laser beam is injected, emitted or reflected through Surface D or Surface E.

Optionally, Surface D or Surface E is a flat or spherical surface.

The slab type nonlinear optical device may use a nonlinear optical crystal having a Z axis disposed normal to a plane including the light path provided in the nonlinear optical device and having a temperature adjusted with a temperature adjuster for retaining a phase matching temperature.

According to a further aspect of the present invention there is provided a method as claimed in claim 15.

According to a further aspect of the present invention there is provided a method as claimed in claim 16.

This invention contemplates multiplying the light path for the laser beam in one and the same region within the solid-state laser medium by imparting numerous directions thereto and enabling the laser beam to pass this region as many times before it is emitted from the laser medium and setting this light path accurately. This solid-state laser medium may be a slab in the form of a triangular prism. In this solid-state laser medium, the light path therein may be multiplied by utilizing the reflection on the two side faces positioned one each in the two sides other than the longest side (hypotenuse) of the triangle of each of the upper and lower faces of the slab. Further, the multiple light path may be formed in the numerous directions by doubling the multiple light path with the reflection on the side faces including the hypotenuse. The consequence of this multiplication of the light path is the acquisition of a high laser gain, which enables the laser medium using a laser active element heretofore unusable in a laser device on account of an unduly small cross sectional area for induced emission to effect laser oscillation.

The laser medium or the nonlinear optical device furnished with the multiple light path contemplated by this invention as described above is at an advantage in enabling a light path with a length far greater than the length of the laser medium or the nonlinear optical device to be provided inside the laser medium or the nonlinear optical device. Thus, the laser medium or the nonlinear optical device possessing a large laser gain or a large nonlinear optical effect can be obtained even when the cross section of induced emission is small. Moreover, since no reflection needs to be effected outside the laser medium or the nonlinear optical device by using an external body, the large laser gain or the large nonlinear optical effect never suffers loss due to the optical loss of the antireflection film during the passage through the end face of the optical device.

The ordinary configuration which has prevailed hitherto has a multiple light path provided inside a laser rod by using external reflectors. In contrast, since the laser medium contemplated by this invention has a multiple light path provided inside a laser medium by forming reflecting films on the side faces of the laser medium which may be in the form of a triangular slab, this invention in principle is capable of eliminating the optical loss caused by the antireflection film during the course of input and output of the laser beam through the end faces of the conventional laser rod.

Further, inside the laser medium, the difference in excitation distribution gains in prominence between the part close to and the part far from the excitation light source. By causing the laser beam inside the laser rod to be wholly reflected on the three side faces and having the resultant light paths disposed closely in numerous different directions, however, the excitation distribution on the part of the laser beam can be averaged and moderated more.

Further, the fact that a multiple light path may be formed in the laser medium and disposed accurately brings, in the conventional laser device, the effect of eliminating the spatial hole burning which occurs, for example, in the laser device configured by combining a laser medium with a Fabry-Perot (FP) resonator. It is known that the spatial hole burning renders the simple vertical mode oscillation difficult to occur. In laser mediums of this specification, the spatial hole burnings generated by the standing wave of the laser beam are enfeebled by overlapping in numerous directions. Heretofore, the manufacture of a single-frequency solid-state laser with high output has never been successful unless the contrivance, such as a one-way ring resonator incapable of generating a spatial hole burning, is used. By using the laser medium which has light paths disposed as contemplated by this invention, however, it is made possible to obtain the laser oscillation of a single frequency with high output even by the use of a standing wave type laser resonator. That is, the individual sections of the light path forming the multiple light path are overlapped while the positions and the directions thereof are spatially changed little by little. This fact brings the effect of averaging or compensating the various forms of lack of uniformity of spatial hole burning and excitation distribution and refractive index profile in the laser medium.

Further, the laser medium of this invention may have the form of a basically triangular prism and uses the three side faces of the prism as optical surfaces. The triangular prism is characterized by having the shape thereof decided exclusively by the angles between these optical surfaces. The manufacture of the conventional zigzag slab laser medium necessitates high dimensional accuracy and high angular accuracy. The manufacture of the laser medium in this invention can lead to no need for high dimensional accuracy as described above. The angular accuracy which is required may be such as is necessary for the production of an inexpensive triangular prism. The device of this invention, for the sake of simple production, can be completed by the treatment of optical polishing given to the three surfaces and the formation of an optical film on the two surfaces. Generally, the polishing step can easily reach the angular accuracy of surfaces but cannot easily reach the highly accurate spacing of planes. The laser medium or the nonlinear optical device contemplated by this invention chiefly necessitates the angular accuracy exclusively. It does not necessitate high manufacturing accuracy because the error of the angles of surfaces can be corrected by the adjustment of the angle of incidence. Thus, it enjoys the advantage of easy manufacture.

BRIEF EXPLANATION OF THE DRAWING

FIG. 1(a) is a schematic plan view illustrating a basic example of the solid-state laser medium which may be used in carrying out this invention, and FIG. 2 is a perspective view thereof.

FIG. 2 is a schematic plan view illustrating another example of the solid-state laser medium which may be used in carrying out this invention.

FIG. 3 is a schematic view illustrating the conventional solid-state laser medium.

FIG. 4 is a light path development depicting the expansion of the reflection on Surface C of the laser medium of FIG. 1.

FIG. 5 is a diagram showing the value of the right side of Formula 5 regarding the number of points of reflection n

FIG. 6 is a diagram of ray tracing in the laser medium of FIG. 1.

FIG. 7 is a diagram of ray tracing in the laser medium of FIG. 3.

FIG. 8 is a diagram of ray tracing in the conventional slab type laser rod of the form of a parallelogram provided with an incidence part and an emission part and furnished with reflecting films in other parts.

FIG. 9 is a diagram of an example of doubling a multiple light path of FIG. 8.

FIG. 10 is a diagram of another example of doubling a multiple light path of

FIG. 8.

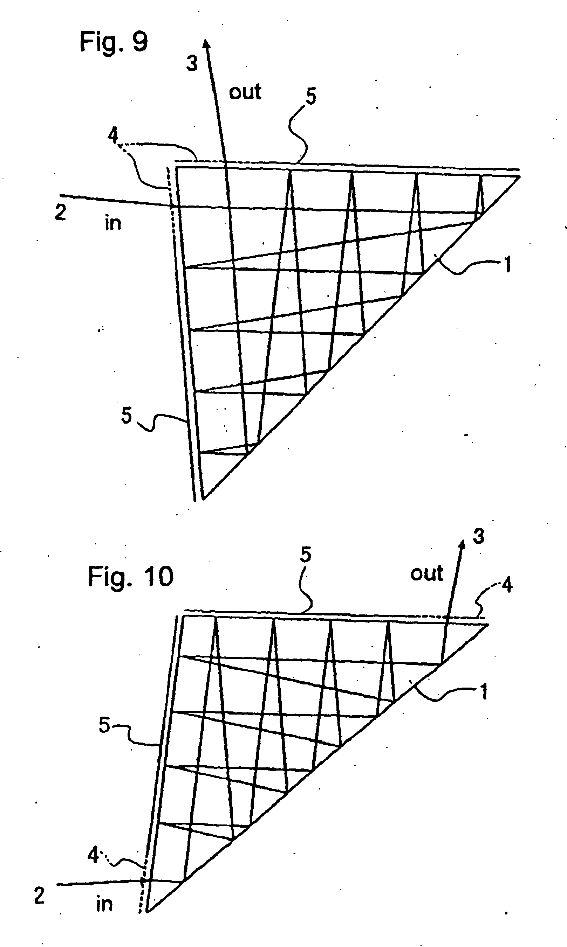

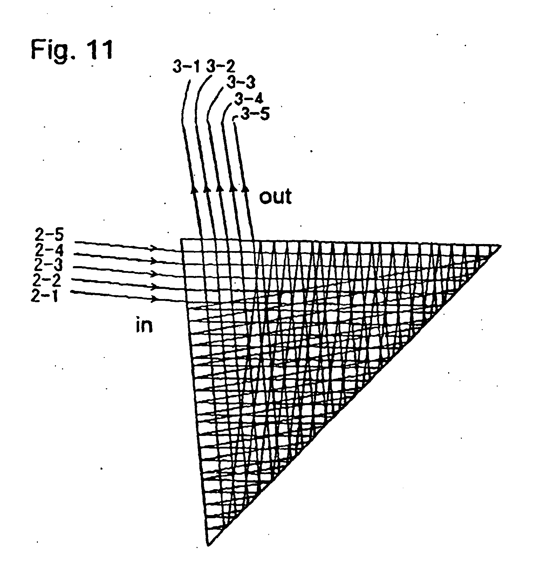

FIG. 11 is a diagram of ray tracing in the laser medium of FIG. 9.

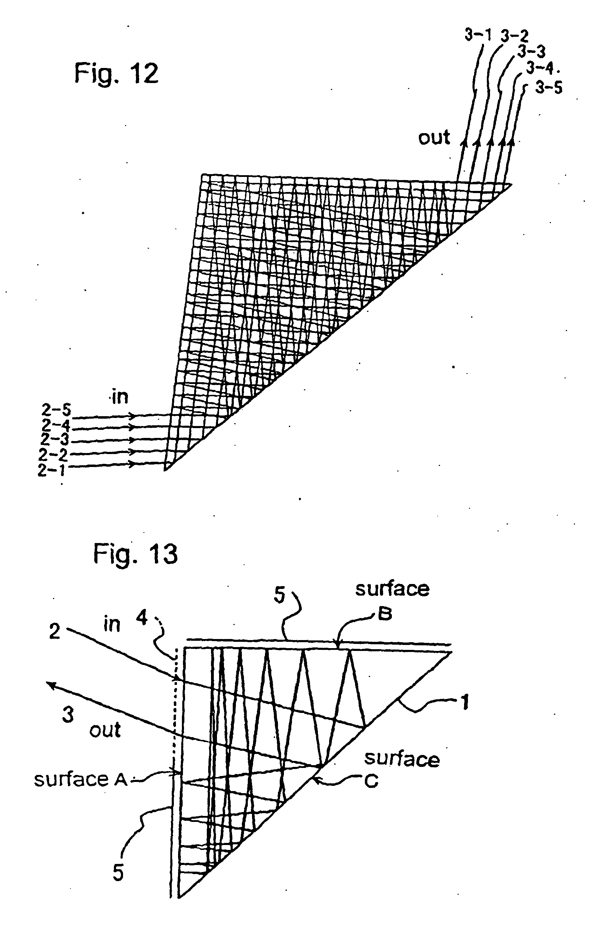

FIG. 12 is a diagram of tray tracing in the laser medium of FIG. 10.

FIG. 13 is a schematic view illustrating the solid-state laser medium which may be used in carrying out this invention, with the position of the incidence and emission parts shown as Surface A.

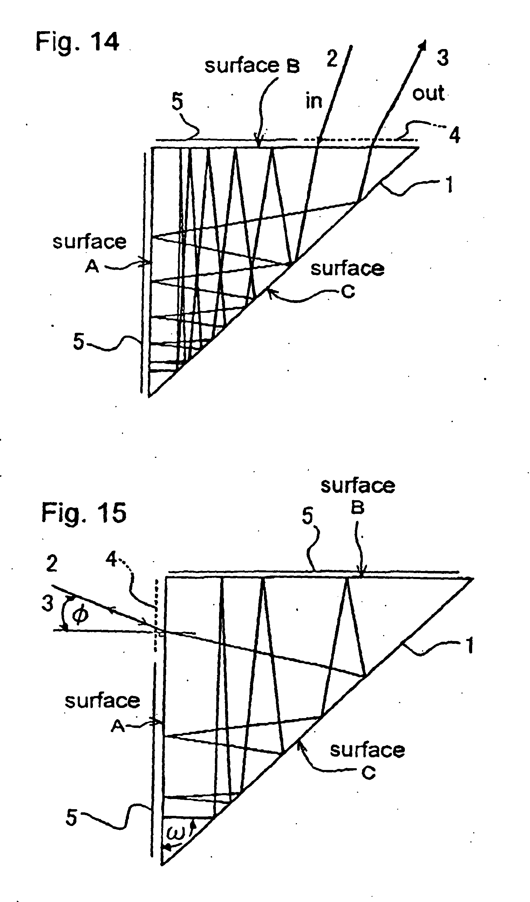

FIG. 14 is a schematic view illustrating the solid-state laser medium which may be used in carrying out this invention, with the position of the incidence and emission parts shown as Surface B.

FIG. 15 is a schematic view illustrating the solid-state laser medium which may be used in carrying out this invention, with the position of the incidence and emission parts shown as Surface A and the angle of incidence varied.

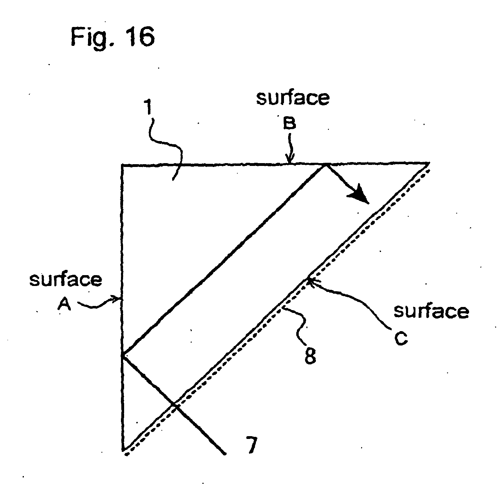

FIG. 16 is a diagram illustrating a preferred excitation surface of the laser medium which may be used in carrying out this invention.

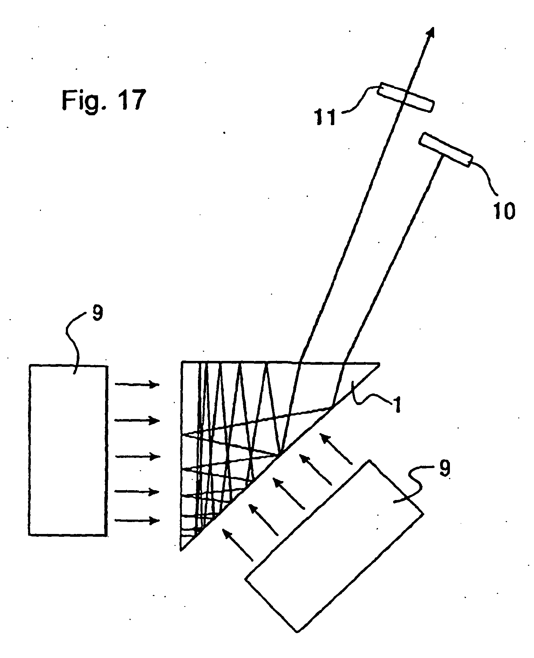

FIG. 17 is a schematic view of a continuous oscillation laser configured by using the laser medium which may be used in carrying out this invention.

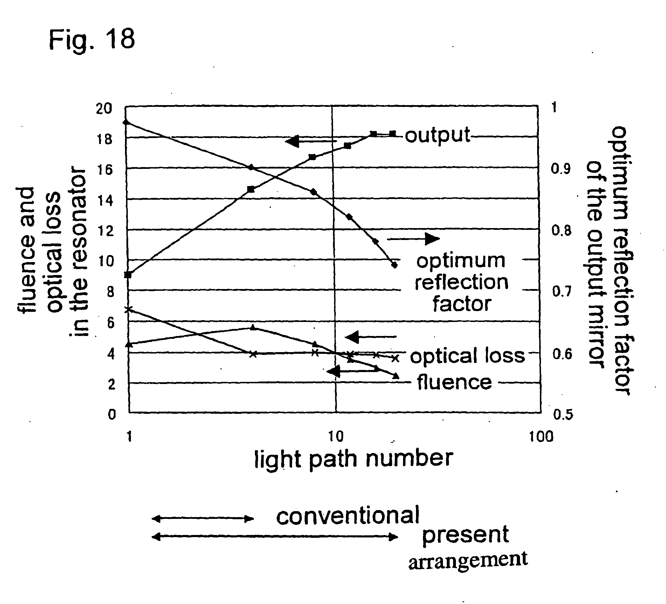

FIG. 18 is a diagram illustrating the plot of the calculated values of the optimum reflective index of the output mirror, the light loss in the resonator and the fluence in the resonator.

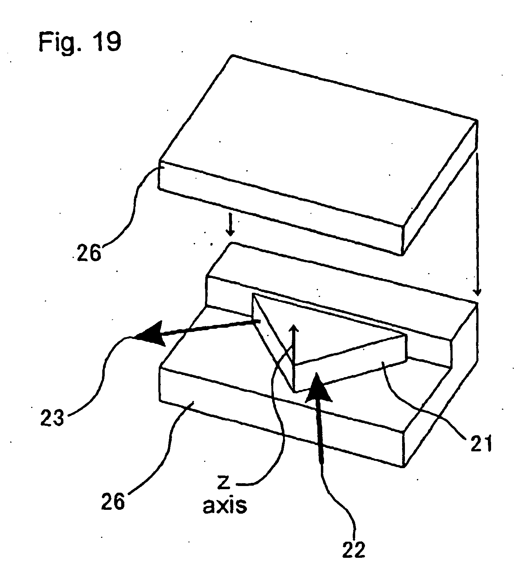

FIG. 19 is a schematic view illustrating the second higher harmonic wave generating device using the nonlinear optical medium which may be used in carrying out this invention.

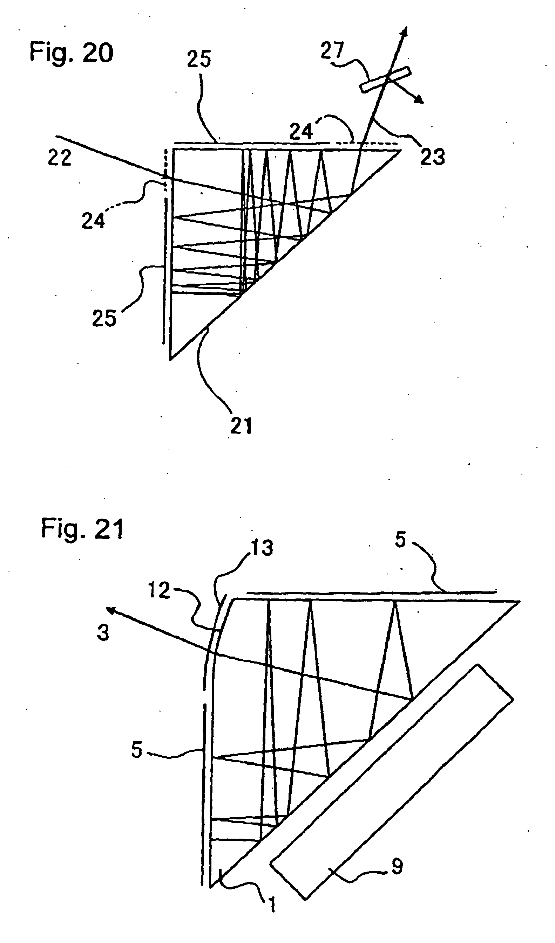

FIG. 20 is a diagram illustrating an example of the second higher harmonic wave generator using a nonlinear crystal $MgO:LiNbO_3$.

FIG. 21 is a schematic view illustrating the solid-state laser medium which may be used in carrying out this invention which is provided on Surface A with a spherical output part.

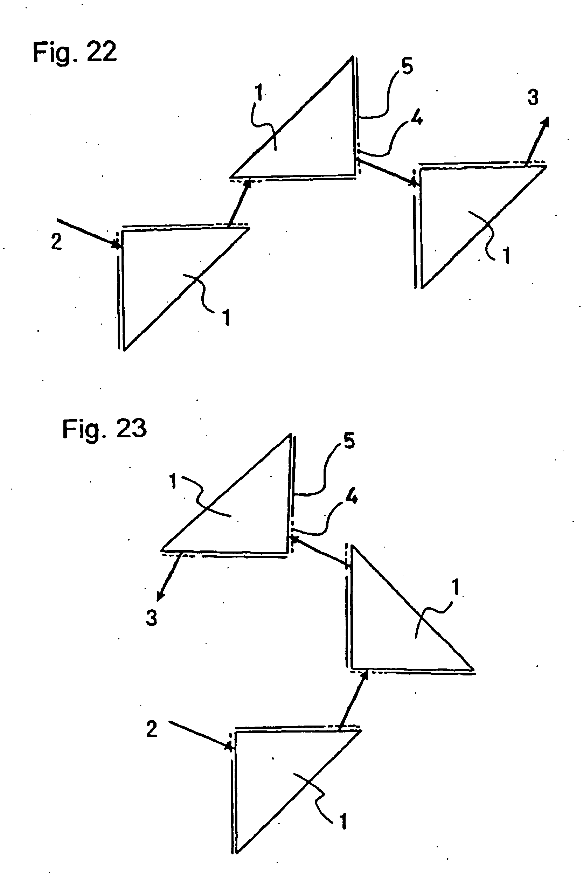

FIG. 22 is a schematic view illustrating one example of having solid-state laser media which may be used in carrying out this invention connected in series.

FIG. 23 is a schematic view illustrating another example of having solid-state laser media which may be used in carrying out this invention connected in series.

FIG. 24 is a diagram illustrating the prior art.

FIG. 25 is a diagram illustrating the different prior art.

FIG. 26 is a diagram illustrating one example of a passive type Q switch laser using the solid-state laser medium of this invention and a saturable absorption crystal.

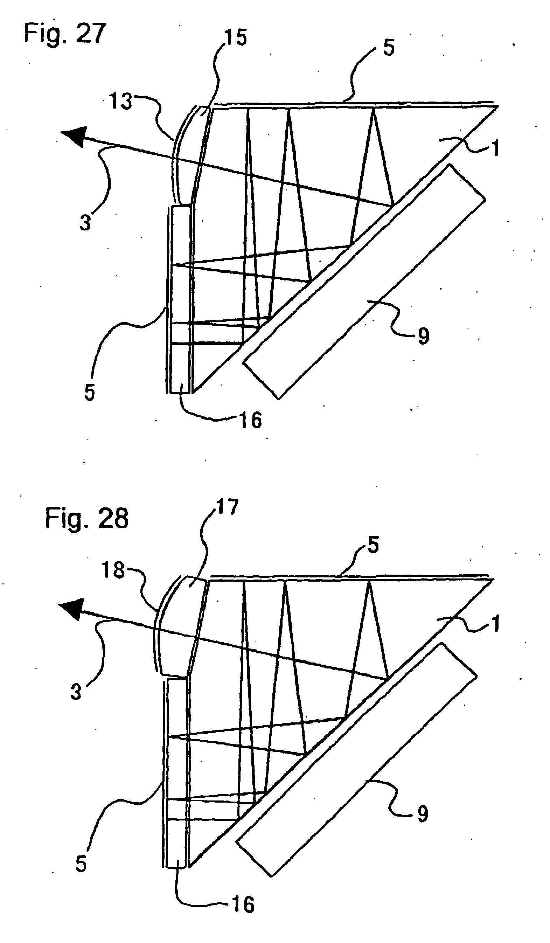

FIG. 27 is a diagram illustrating another example of a passive type Q switch laser embodying this invention using a solid-state laser medium and a saturable absorption crystal.

FIG. 28 is a diagram illustrating a passive Q switch laser embodying this invention using a solid-state laser medium, a saturable absorption crystal and a nonlinear optical crystal.

DESCRIPTION OF THE PREFERRED EMBODIMENT

Now, the embodiments of this invention will be described in detail below with reference to the accompanying drawings. In the following description, devices fulfilling same or similar functions shall be denoted by same reference numerals unless special reasons justifying use of other reference numerals exist. The embodiments shown below are meant for illustration. They have no reason for restricting this invention thereto exclusively.

Embodiment 1:

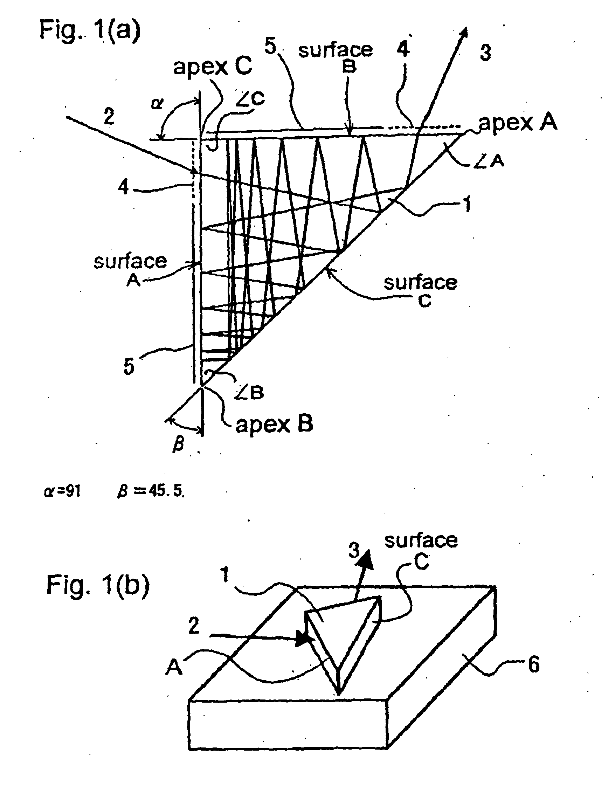

First, an embodiment of this invention will be described with reference to FIG. 1. The solid-state laser medium (laser rod) which may be used in this invention, as illustrated by a plan view in FIG. 1(a) and by a perspective view in FIG. 1(b), is a slab 1 of the form of a triangular prism using a Nd:YAG crystal. The slab has an upper and a lower triangular surface and quadrangular side face A (hereinafter described as "Surface A"), side face B (hereinafter described as "Surface B") and side face C (hereinafter described as "Surface C") lying orthogonal thereto. Surfaces A, B and C are optically polished surfaces which are furnished thereon an antireflection coating and a reflecting film, depending on the purposes of use of the relevant positions. The bottom face of the slab is bonded tightly to a heat sink 6 for cooling. On at least either of Surface A and Surface B which include a vertex A of an angle α approximating the right angle, a part for injecting the laser beam as an incident light 2 or emitting it as an emission light 3 is provided and this part is furnished with a antireflection film for the impingement of the laser beam. The other parts of these two side faces are covered with a highly reflective film. Surface C is or is not furnished with a reflecting film, depending on the occasion. The reflection in this case is produced by the total reflection or the reflecting film. By this arrangement, the site for reflecting the laser beam can be set on the side face of the triangular slab and does not need to be set outside the slab.

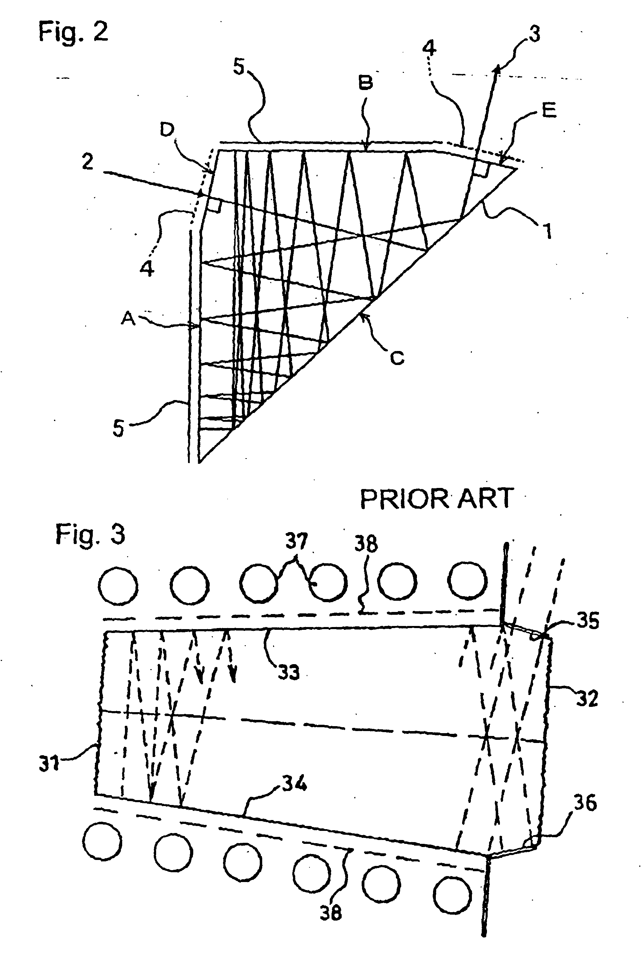

The length of a antireflection film 4 in the incidence and emission parts shown in FIG. 1 is not less than the thickness of a flat plate so as to permit passage of a circular beam and less than half of the length of the surface so as to permit retention of the reflecting part. Surface C forms an angle of β with Surface A, on the condition that $a = 2\beta$ be satisfied. Surface C may be in the form of a polished surface or, when necessary, may be furnished with a highly reflective film. The peripheral parts of the triangular slab which are not passed by the laser beam may be cut off as illustrated in FIG. 2 on the condition that their removal does not affect the light paths inside the slab and then may be furnished with Surface D or Surface E which is a new surface. In spite of this addition of the new surface, the sites for reflecting the laser beam continue to be characterized by being disposed on the side faces of the triangular slab.

To explain the internal light path of the optical device according to this invention, a slab type laser medium using a similar multiple light path as disclosed in U.S. Patent No. 3,665,335 is illustrated in FIG. 3. Surfaces 31, 32, 33, 34, 35 and 36 are optically polished surfaces 30 normal to the surface of the page. Surfaces 35 and 36 are surfaces used for injection and emission of the laser beam and Surfaces 33 and 34 are surfaces furnished with a highly reflective film 38. Surfaces 33 and 34 are mutually converged in the direction of Surface 31 so as to form a small angle θ. The angle θ is not shown in the figure. The laser beam which has been injected through Surface 35 into the laser medium repeats reflection between Surface 33 and Surface 34, moves the light path toward Surface 31, and continues decreasing the angle of incident of the light path by a fixed magnitude (θ) after successive reflections. Finally, the light path is inverted from Surface 31 to Surface 32, caused to increase the angle of injection by θ after each reflection, and injected orthogonally to Surface 36. The laser beam which is reflected on Surface 36 follows backward the light path through which it has advanced thence and departs the laser rod again through Surface 35. The laser medium in which the light injected into the laser rod is returned by having the direction of advance automatically reversed as described above shall be referred to herein as "automatic reversion type multiple light path." The light path of FIG. 3 is characterized by repeating the reflection of the light between Surface 33 and Surface 34 excepting the reflection on Surface 36 which constitutes the point of return.

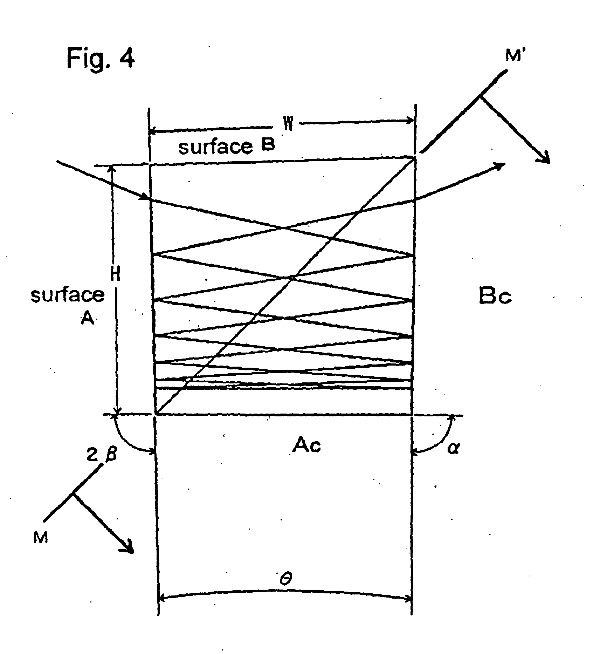

FIG. 4 is a light path development depicting the expansion of the reflection on Surface C with a view to illustrating the light path in the optical device of this invention shown in F1G. 1. In the development, the laser rod assumes the form of a rhomboidal quadrangle and constitutes the same automatic reversion type multiple light path as the light path formed on the lower side from the shield surface of the laser rod of FIG. 3. Here, the degree of multiplicity shall mean the number of segments of light path existing between Surface A and Surface Bc. Surface Ac and Surface Bc respectively represent the images of Surface A and Surface B. Surface A and Surface Bc correspond to Surface 33 and Surface 34 shown in FIG. 3 and they jointly form the angle of θ. The angle θ is fixed by the following formula using the valuables of a and β.

$$\theta = \alpha + 2\beta - \pi \qquad \text{(Formula 1)}$$

Further, on the condition of the equation $a = 2\beta$, the angles which the reflecting surfaces, i.e. Surface A and Surface Bc, form with Surface Ac are equal

The internal light path will be described below on the assumption that the multiple light path is made to assume bilateral symmetry by adjusting the angle of incidence of the laser beam into the incidence part of the laser rod The laser beam which has been injected through the incidence part of Surface A into the optical device repeats reflection between Surface A and Surface Bc shown in the development similarly to the reflection of the laser beam between Surface 33 and Surface 34 shown in FIG. 3. After each of these reflections, the light path moves downward while the angle of incidence on the reflecting surface continues decreasing in an amount of θ at a time. Eventually, the light path reverses the movement upwardly and the angle of incidence increases in an amount of θ after each reflection. The angle formed between the light path directed upward from the n=th point of reflection as reckoned from below on a single side and Surface Ac is nθ. When the laser beam reaches the emission part at the upper right terminal of Surface Bc, it is passed through the antireflection film and emitted to the exterior of the optical device.

In this invention, the quadrangular laser medium is halved on the line connecting the opposed vertexes (MCM=). Since the multiple light path is reflected on Surface C which is consequently formed, this laser medium has two automatic reversion type multiple light paths piled one on top of the other substantially at a right angle. The angles formed by the individual segments of the light path may be piled up in numerous directions in the range of 0 degree to 90 degrees. The laser medium has the form thereof changed from a quadrangular prism to a triangular prism and has the volume thereof halved as well.

It is plain from FIG. 4 that when the light path of FIG. 1 is viewed in the light path development depicting the expansion of the reflection on Surface C, the light path repeats the multiple reflection between Surface A and Surface Be and never fails to pass Surface C in the light path directed from Surface A to Surface Bc or in the reversed light path. Since Surface Bc corresponds to the mirror image of Surface B formed on Surface C, the light path of FIG. 1 is produced by the multiple reflection using the three surfaces, thus Surface A, Surface C, Surface B, Surface C, Surface A, surface C, Surface B, Surface C, Surface A, ... and, after being reflected on Surface A or Surface B, it is reflected on a plurality of other surfaces and is subsequently reflected again on Surface A and Surface B. In this respect, this invention is evidently different from the invention of U.S. Patent No. 3,665,335 mentioned above.

On the assumption that the length H of Surface A has no restriction, the smallest degree of multiplicity is decided when the angle $\theta$, the length W of Surface B and the radius r of the laser beam are fixed. It is assumed here that the equation $\alpha = 2\beta$ holds and the number of points of reflection is n each on Surface A and Surface Be. The angle formed between the first light path in the laser rod and the straight line connecting the incidence and emission points is $n\theta$. This angle must be approximately larger than the arctan (2r/W) because the first light path which has been injected into the laser rod is not allowed to protrude into the emission part. The number n of points of reflection, therefore, must satisfy the following formula:

$$n \geq \frac{1}{\theta} \cdot \arctan\left(\frac{2r}{W}\right) \qquad \text{(Formula 2)}$$

Consequently, the degree of muhiplicity is 2n + 1.

The largest degree of multiplicity can be found from H, W, $\theta$, and the radius of beam r. On the assumption that the number of points of reflection on a single side is n, the change of height from a certain point of reflection to the subsequent point of reflection on the multiple light path is found geometrically and the distance from these points of reflection to the points of reflection in the lowermost stage is found based on the change of height. It is assumed that $P_R$ and $P_L$ respectively denote the right and left points of reflection of the light path on the lowermost stage in FIG. 4, $L_B$ (= $|P_R - P_L|$) denotes the distance between these two points, and point 2 of reflection and point 3 of reflection are reckoned upwardly. The origin is placed at the middle between the left and right points $P_L$ and $P_R$ of reflection and the x axis is taken in the right direction and the y axis in the upward direction from the origin on the surface of the page. Let $(X_k, Y_k)$ stand for the x-y coordinates of the point $P_K$ of reflection, and it will be given by the following formula:

$$(X_k \quad Y_k) = \left( \pm \frac{W}{2} \cdot \prod_{i=1}^{k-1} F_i \quad \frac{W}{2} \cdot \frac{\prod_{i=1}^{k-1} F_i - 1}{\tan(\theta/2)} \right) \qquad \text{(Formula 3)}$$

wherein $F_i$ satisfies the following formula, with i as an integer of not less than 1.

$$F_i = \frac{1 + \tan(\theta/2)\tan(i\theta)}{1 - \tan(\theta/2)\tan(i\theta)} \qquad \text{(Formula 4)}$$

The exact form of the triangular slab and the light path are decided in accordance with Formula 3. Conversely, the number of points of reflection in Formula 3 is decided without fail by the value of $\theta$ of the triangular slab which has been manufactured. Since the distance from the incidence point of the laser beam to the point $P_L$ of reflection must become smaller than what remains after subtracting the beam diameter 2r from H. it Satisfies the following formula.

$$\frac{H-2r}{W} \geq \frac{\prod_{1}^{a} F_i - 1}{2\tan(\theta/2)}$$

(Formula 5)

When the degree of multiplicity at $a = 2\beta$ is high, the angle $\theta$ decreases and the upper and lower sides of the triangular slab approximate to a right isosceles triangle, which may be regarded as practically satisfying H = W. In this case, the left side of Formula 3 is about 1 at most, the right side thereof is smaller than the left side, and the largest n gives the largest degree of multiplicity of 2n + 1 to the light path in the multiple light path development. The ratio of the length 2r of the incidence part to the length H of Surface A is found from Formula 3. The ratio 2r/H is naturally 0.5 when the number of points of reflection is one per side. When the number of points of reflection is 2 or more, this ratio is decided exclusively by $\theta$ and the value of n as expressed by the following formula.

$$\frac{2r}{H} = \frac{\prod_{1}^{a-1} F_i \cdot (F_a - 1)}{\prod_{1}^{a-1} F_i \cdot (2F_a - 1) - 1}$$

(Formula 6)

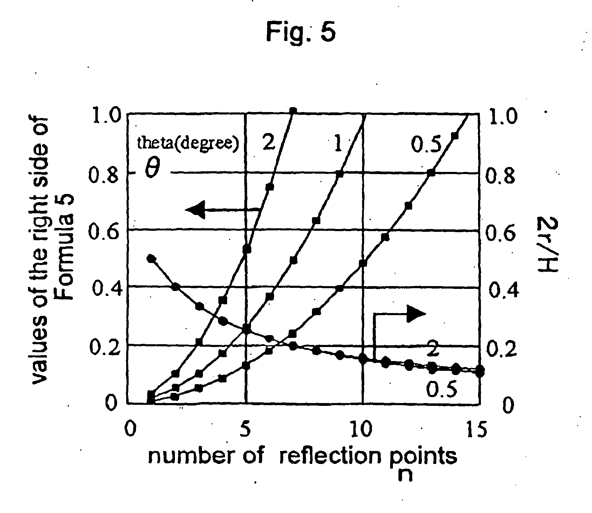

FIG. 5 is a graph showing the values of the right side of Formula 5 and the ratio of (2r/H) of Formula 6 relative to the number n of points of reflection for the values of $\theta$ set at 0.5 degree, 1 degree and 2 degrees. In the laser medium with $\theta$ = 0.5 degree, the number of points of reflection on Surface A or Surface Bc is 13 at most and the multiple light path is allowed to have a degree of multiplicity up to 27 and the value of the ratio of (2r/H) decreases from 0.5 to 0.13 in accordance as the number of points of reflection increases.

Whether or not the reflection on Surface C necessitates a reflecting film is decided by the disposition of the multiple light path. The angle of incidence to Surface C is $\beta$ - (n + 1/2)0 when the incident light is reflected first on Surface C. Surface C is in need of a reflecting film when this angle is smaller than the critical angle of the material of the laser rod. For the purpose of amplifying the laser beam whose direction of polarization is orthogonal to the upper and tower sides of the stab, the reflecting film is only required to be a polarizing reflecting film which reflects the S polarized light at a high degree. When this angle is larger than the value mentioned above, Surface C does not need to be furnished with a reflecting film because the reflection is invariably in the form of total reflection. As the degree of multiplicity increases, the angle of incidence of the light reflected on Surface C decreases and Surface C, therefore, partially requires a reflecting film. Even when the reflecting film is applied wholly to Surface C, the total reflection occurs at the point of reflection satisfying the conditions of total reflection. The reflecting film at this point suffers no optical loss

In a concrete design, it suffices to decide $\theta$ by setting a practical degree of multiplicity within the aforementioned range of degree of multiplicity because the diameter of the beam and the size of the laser rod are decided. The disposition of the multiple light path is decided solely by $\theta$ which is decided by the combination of a and $\beta$ and, therefore, does not always need to satisfy $\alpha = 2\beta$.

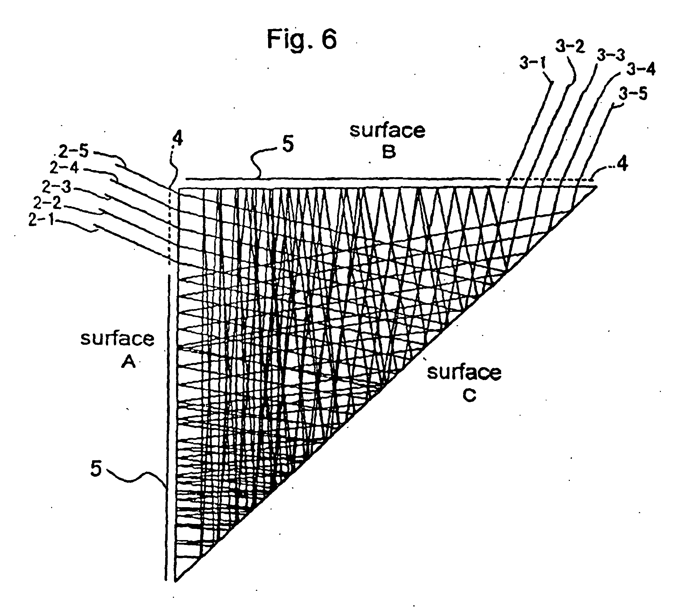

To illustrate the state of overlapping the light path in numerous directions in the laser medium shown in FIG. 1, FIG. 6 offers a diagram of ray tracing in this laser medium. In the figure, incident beams 2-1, 2-2, 2-3, 2-4 and 2-5 respectively corresponds to output beans 3-1, 3-2, 3-3, 3-4 and 3-5. The degree of multiplicity is 13 light paths. Since the automatic reversion type multiple light path is piled in two folds, the light paths fill up nearly all parts of the interior of the laser rod and the region not passing the laser beam is practically absent.

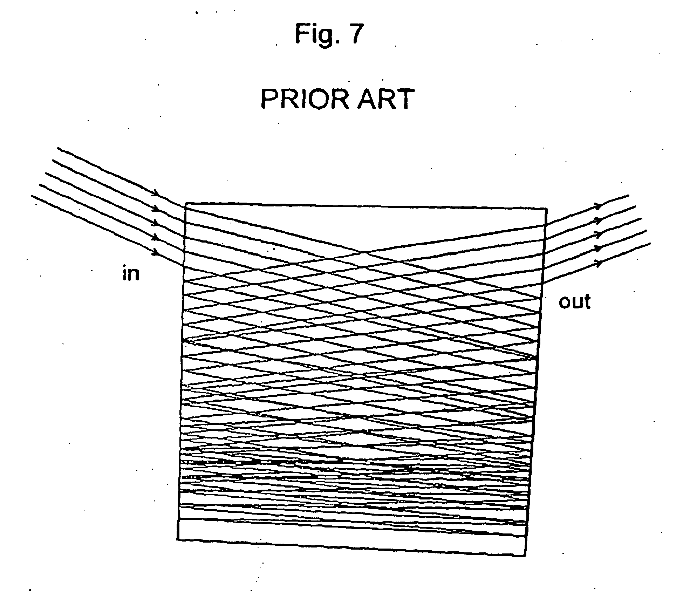

In contrast therewith, the laser medium of FIG. 3 incorporating therein a single automatic reversion type multiple light path yields a diagram of ray tracing as shown in FIG. 7. The part which allows no passage of the light path exists in the region interposed between the incidence part and the emission part in the laser rod. Since the first light path injection through the incidence part into the laser rod must not protrude into the emission part, the region allowing no passage to the light path never fails to occur even when the number of light paths may be increased by varying the angles of surfaces of the laser rod. In the upper half of the slab, two light paths or less are only allowed to overlap. Though the number of overlapping light paths increases in the light path reversion part on the lowermost stage, the spatial hole burning is eliminated only with difficulty because nearly all of these light paths are in parallel. Between the side faces of the laser rod which are parallel and adjacent to the lowermost light paths, the presence of the region allowing no passage to the laser beam is indispensable on account of manufacturing error and for the sake of the adjustment of the light path of the resonator. Thus, when the excitation is effected through these side faces, the energy which has been absorbed in the impassable region proves wasteful. When the excitation of the laser rod is passed through the left and right laser beam reflecting surfaces, the light to be injected or emitted may be possibly blocked by the excitation light source.

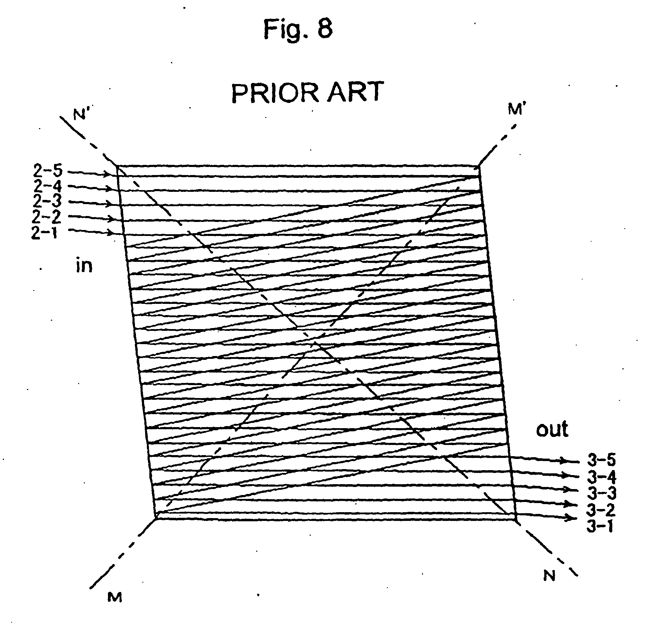

As an example of the multiple light path which is not of the automatic reversion type and which uses an ordinary external reflector, the slab type laser rod of the form of a parallelogram which is provided with an incidence part and an emission part and furnished in the other part with a reflecting film yield a diagram of ray tracing as illustrated in FIG. 8, in which the degree of multiplicity is 9. In this layout of the light path, the number of duplication of light paths in the individual parts of the interior of the laser rod is not more than 2 and, therefore, the elimination of the spatial hole burning cannot be expected.

The automatic reversion type is characterized by enabling the number of duplication of light path in the individual parts of the interior of the laser rod to be easily increased beyond 2. The current arrangement, by further piling them in two folds, is enabled to realize the overlapping of light paths in numerous directions and the generous decrease of the region for permitting no passage of the laser beam within the slab.

The ordinary multiple light path illustrated in FIG. 8 can also be doubled in the current laser medium by setting the angles of the vertexes of the triangle so as to satisfy $\alpha = 2\beta = \pi/2$ to attain $\theta = 0$. Examples of this doubling are illustrated in FIG. 9 and FIG. 10. They are the triangles which are each obtained by halving the parallelogram of FIG. 8 along the two lines connecting the opposite vertexes (MCM= or NCN=). Their diagrams of ray tracing are illustrated in FIG. 11 or FIG. 12. By doubling the multiple light path of this invention, it is made possible to improve the multiple light path in such a manner that the light path fills up the interior of the laser medium and the light path overlaps in four folds from four directions in nearly all the parts. Consequently, the spatial hole burning is suppressed. When the angles of the vertexes are set so as to satisfy $\theta = 0$ perfectly, an unnecessary resonator is formed between Surface A and Surface B. This mishap may be avoided successfully by deviating $\theta$ only slightly from zero. This angle of successful deviation is generally not less than 1 minute of arc.

The disposal of the light path in the current laser medium can be altered by changing the positions of the incidence and emission parts of the laser medium. For example, even the device having the same shape as that of FIG. 1 is allowed to have the incidence and emission parts disposed solely in Surface A as illustrated in FIG. 13 or the incidence and emission parts disposed solely in Surface B as illustrated in FIG. 14.

Further, the disposition of the light path can be altered by selecting some other angle of incidence. For example, the incidence light path and the emission light path existing in Surface A or Surface B may be made to coincide perfectly as illustrated in FIG. 15. This perfect coincidence is accomplished by adjusting the angle of incidence $\varphi$ so as to satisfy $\omega = 90°$.

In the light path development of FIG. 4, when the light path numbers are expressed as by having light path number 1 denote a light path reaching from Surface A to Surface Bc, then light path number 2 denote a light path reaching Surface A, further light path number 3 denote a light path reaching Surface Bc and so on and when the lengths of Surface A and Surface B are fixed, the alteration of the degree of multiplicity, $2n + 1$, of the current laser medium is basically accomplished successfully by changing the $\theta$ represented by Formula 1 or the angle of incidence $\varphi$. This is because the degree of multiplicity decreases in accordance as the $\theta$ increases and the degree of multiplicity increases in accordance as the $\theta$ decreases. When the increase of the part permitting no passage of light in the laser medium is taken into consideration, however, the alteration of the degree of multiplicity may be accomplished solely by changing the angle of incidence. The error of the angle at the vertex of the bottom side of the laser medium can be eliminated by increasing or decreasing the angle of incidence for necessary correction.

The smallest value of the degree of multiplicity is 3 in the device of FIG. 1 and 4 in the laser media of FIG. 13 and FIG. 14. At this time, the internal angles of incidence of the incidence light and emitting light have the values of $3\theta/2$ and $5\theta/2$ respectively. Since the internal angle of incidence can assume any arbitrary magnitude falling in the range of from 0 degree to Brewster angle, the value of $\theta$ is any arbitrary angle falling in the range of from zero degree or more to 2/3 times the Brewster angle which is decided by the refractive index of the material. For example, in the case of the laser medium using a YAG crystal having a wavelength of 1064 nm and a refractive index of 1.82, the Brewster angle is 28.8 degrees and the laser medium using a YAG crystal has the angle $\theta$ of a value in the range of from zero degree or more to 19.2 degrees or less. In the case of the laser medium satisfying $\alpha = 2\beta$, the value of a is 80.4 degrees or more and 99.6 degrees or less. Then, in the case of the uniaxial optical crystal of YLF having an extraordinary light of a wavelength of 1047 nm, since the refractive index assumes a value in the range of 1.47 to 1.448 depending on the angle from C axis in the direction of propagation, the angle of θ similarly varies in the range of from zero degree to 23.1 degrees. Again in this case, a is 78.5 degrees or more and 101.6 degrees or less when a = 2β is satisfied. When the generation of the region permitting no passage of the light path within the slab is taken into consideration, generally the angle of α falling in the range of 75 degrees to 105 degrees suffices for the manufacture of the current slab.

The current laser medium needs the antireflection film exclusively in the incidence and emission parts of the laser medium because it can effect the reflection into the laser medium by the reflecting film attached to the side faces of the triangular slab and form the multiple light path without using any other external reflector. It is adapted to effect passage of the laser beam through the antireflection film exclusively when the laser beam enters and departs the laser medium. Thus, the lasting interaction between the laser beam and the laser medium can be secured without incurring any appreciable loss of the antireflection film. Further, since the light path is distributed in high density spatially near Surface A, the interaction between the laser beam and the laser medium in this portion can be effectively utilized.

The excitation of the laser medium is effected by passing the light from an external light source as an excitation light 7 (FIG. 16) through the exciting surfaces which comprise the side faces of the triangular slab or the upper and lower sides thereof or the combinations thereof. As the light source, a discharge lamp, a laser diode and the sun are available. Favorably, the incidence surfaces for the excitation light (hereinafter referred to as "exciting surfaces") have attached thereto a antireflection film 8 proper for the exciting wavelength in order to exalt the transmission factor to the excitation light. The preferable exciting surface is Surface C which induces no interference between the incidence and emission lights and the light source as illustrated in FIG. 16. Since the excitation light which has passed Surface C is reflected on Surface A and Surface B, the excitation light which has passed an arbitrary point of Surface C can pass the distance of length substantially along the page surface of Surface C. Further, this laser medium can be utilized for the end pumping which comprises injecting the excitation light along the incident light or in the direction opposite to the emitting light as illustrated in FIG. 16.

When the laser medium is optically excited as illustrated in FIG. 16, the region of a high duplication number of light path within the device can be emphatically excited. In the laser medium of FIG. 16, for example, the position of Surface C near Surface A is emphatically excited. Consequently, it is made possible to eliminate the spatial hole burning in the laser medium (rod) even when this laser beam is combined with a Fabry-Perot resonator to configure a laser oscillator. This successful elimination is ascribed to the fact that since the laser beam advances in varying directions in the region of a high duplication number of light path, the standing wave of the electric field which results from the reciprocation of the light between one pair of resonator mirrors is overlapped in numerous folds in different directions and eventually eliminated. Heretofore, for the purpose of obtaining a single vertical mode oscillation of high output with a solid-state laser, it has been necessary to combine the etalon of a vertical mode selecting device with a special resonator, such as a unidirectional ring laser resonator or a twist mode resonator. This invention can be, at an advantage in realizing a solid-state laser of the single vertical mode oscillation of high output by the simple configuration of a resonator using a Fabry-Perot resonator and an etalon.

In the single pass solid-state laser medium, the increase of the intensity of excitation results in rendering the lack of uniformity of temperature distribution in the laser medium conspicuous and inducing lack of uniformity of refractive index profile and optical lack of uniformity of double refraction in the laser medium and bringing degradation of the oscillation transverse mode. In the current laser medium, the light path is overlapped as disposed in varying directions. This fact is at an advantage in averaging such optical ununiformity similarly to the spatial hole burning and rendering the transverse mode difficult to degrade.

As examples of the exaltation of the oscillation efficiency, the case of using a single pass laser medium of Nd: YAG crystal measuring 1.25 cm in length and 4.5 mm in diameter and the case of using a multiple light path laser medium of the form of a right triangular slab of the current type having the same volume and including Surface A measuring 1.25 cm in length are compared in oscillation properties with the case of configuring a continuous oscillation laser by combining a Fabry-Perot resonator between an output mirror 11 and an end mirror 10 having a resonator length of 30 cm with an excitation light source 9, such as an LD, as shown in FIG. 17. It is assumed that the reflection factor of the high reflecting film in the resonator is invariably 99.9% and the transmission factor of the antireflection film is 99.85%. The electric power for exciting the Nd ions to the upper level is about 26 W when the excitation energy absorbed by the laser medium is invariably assumed to be 35 W. The plot of the calculated values of the outputs of light path numbers 1, 4, 8, 12, 16 and 20, the optimum reflection factor of the output mirror, the optical loss in the resonator and the fluence in the resonator is shown in FIG. 18.

The highest laser output that is obtained with the single pass laser medium is only 9W. This deficiency in the laser output is ascribed to the fact that the fluence cannot be exalted and the greater part of the upper level energy is lost in the form of spontaneous discharge light and by virtue of nonradiative transition owing to the small laser gain of the laser medium and the optical loss of the resonator. The necessary output mirror reflection factor is 98% and the output is further lowered when a mode selecting device is inserted into the resonator and the resonator loss is consequently increased.

In the conventional laser medium of a multiple light path resorting to external reflectors, the highest degree of multiplicity is only 4. In this case, the effect of multiplication is manifested in the form of an increase of the output to 14.6 W. Since the output mirror reflection factor is required to be 90%, the output is lowered in accordance as the resonator loss is increased.

In contrast therewith, when the use of the current laser medium yields a degree of multiplicity of 16 or more, the oscillation efficiency is greatly improved as evinced by the laser beam output which is 18 W or more. Moreover, since the optimum output mirror reflection factor is lowered to 78% or less on account of the high gain of the laser medium, the output is not lowered even when the resonator loss is increased. This steady output is ascribed to the fact that the high fluence in the resonator is not necessary because the individual Nd ions ideally interact with the laser beam as frequently as the degree of multiplicity each time the laser beam passes the laser rod. The fact that the fluence can be lowered is at an advantage in lowering the possibility of the laser medium being injured by the laser beam.

As the host material for the current laser medium, any of all the laser base materials that have been used hitherto may be used. For example, the isotropic laser media include crystals, such as YAG and YSGG, which belong to the cubic system, laser glass and ceramic YAG. The anisotropic laser crystals which are only required to preclude the laser beam from being separated on the incidence surface into two polarized lights include optically uniaxial laser crystals, such as YLF, $YVO_4$ and $Al_2O_3$, and optically biaxial crystals, such as KGW and LSB. In the case of a uniaxial laser crystal, the laser beam of an ordinary or extraordinary light can be utilized by having the optical axis set orthogonally or in parallel to the slab surface of the triangular slab laser device. Also in the case of the optically biaxial crystal, it is only necessary that any one of the three main coordinate axes of the ellipsoid of refraction factor be set orthogonally or in parallel to the slab surface. The element which can dope the laser base material in the form of laser active ions is any of all the active elements hitherto utilized for the solid-state laser media. As concrete examples of these active elements, rare earth elements, such as Nd, Yb, Tm, Ho and Er, iron family elements, such as Cr and Ti, may be cited.

In the preceding part hereof, this invention has been described as specifically restricted to the laser medium. This invention also embraces a concept which comprises manufacturing a nonlinear optical material instead of the laser medium into a triangular slab and using this triangular slab as a nonlinear optical device. This nonlinear optical device may be utilized for effecting wavelength conversion, for example. The wavelength conversion utilizing the nonlinear optical effect is known in various versions, such as generation of higher harmonic wave, optical mixing and wavelength conversion resorting to parametric interaction or Raman interaction. By using the light path of this invention described above in combination with the nonlinear optical crystal, it is made possible to derive a large nonlinear optical effect from the utilization of a great length of interaction even when the nonlinear optical coefficient of the crystal is small. The nonlinear optical crystal to which this combined use is applicable is a uniaxial nonlinear crystal which is capable of 90-degree phase matching and a Raman interaction medium. As concrete examples of this nonlinear optical crystal, $LiNbO_3$ and $MgO:LiNbO_3$ which results from doping the crystal just mentioned with another element for the purpose of elevating the laser beam injury threshold may be cited. Preferably in this case, Surface A and Surface B and, optionally, Surface C are furnished with a reflecting film for the light which has undergone wavelength conversion with the incident laser beam, the incidence part is furnished with a antireflection film for the incident light, and the emission part is furnished with a antireflection film for the light which has undergone wavelength conversion.

In this embodiment, simply it is necessary that the Z axis of a crystal manifesting such a nonlinear optical effect as mentioned above be directed orthogonally to the upper and lower sides of a nonlinear optical device 21 which may be used in carrying out this invention as illustrated in FIG. 19 and that the device be mounted so that it may be retained at a phase matching temperature. Preferably this mounting is performed by having the nonlinear optical device 21 nipped with mounts 26 each furnished with a heater. The direction of the Z axis is arbitrary. In the case of a second higher harmonic wave generating device of $LiNbO_3$ crystal having a wavelength of 1064 nm, for example, when the incident light is polarized within the flat plate surface and injected along the light path of FIG. 1 into the device, the second higher harmonic wave having a wavelength of 532 nm is generated along the light path as polarized orthogonally thereto. FIG. 20 illustrates an example of the second higher harmonic wave generator using a nonlinear crystal $MgO:LiNbO_3$. It is assumed that the crystal is so mounted that the Z axis thereof may be directed orthogonally to the page surface and that the device may retain a phase matching temperature. When the fundamental wave 22 of a laser beam is injected through an antireflection layer 24 as an input into the incidence part as illustrated in FIG. 20, after some reflections between high-reflection layers 25, for example, a second higher harmonic wave 23 of a laser beam corresponding to the fundamental wave 22 of the injected laser beam is derived from the emission part. The fundamental wave of the laser beam is suppressed by forwarding the light from the emission part to a higher harmonic wave separator 27.

Next, the characteristic of the case of applying the solid-state laser medium (laser rod) mentioned above to a laser device will be described below.

1) Augmentation of gain of laser medium: The laser gain can be augmented owing to the fact that the utilization of great length of the light path is attained by multiplication. This augmentation is equivalent to the multiplication of the cross sectional area for induced emission of the laser active ions in proportion to the degree of multiplicity. As compared with the conventional case of multiplying the light path in the laser medium by the use of an external reflector the present arrangements are at an advantage in incurring a small optical loss due to the antireflection film in the incidence and emission parts of the laser medium. Consequently, the action of the laser device using the current laser medium can be approximated to saturated amplification and the energy accumulated in the laser medium can be converted more efficiently to the laser beam. According to this invention, the laser beam can be advanced six times or more inside the laser rod without requiring use of any other optical device and the optical part of the amplifier can be configured solely with a laser medium and an excitation light source. Consequently, the device can be miniaturized and easily provided with enhanced performance and improved reliability.

2) Exaltation of excitation light absorption factor and averaging of excitation distribution: The multiple light path due to multiple reflection, though having many spatially overlapping parts, is overlapped as deviated little by little and is widely distributed in the greater part of the laser medium. It, therefore, has a large volume for absorbing the excitation light (excitation volume) as compared with the conventional disposition. The excitation light absorption factor, therefore, is heightened. If the current laser medium is subjected to side-face excitation and the existing light absorption factor approximates closely to 100%, the intensity of the excitation light will be decreased and the excitation distribution will incur serious lack of uniformity at the points distant from the incidence point of the excitation light. Even in the case of this sort, since the direction of propagation of the laser beam forms various angles relative to the gradient of the excitation distribution, the effects exerted on the laser beam by optical lacks of uniformity, such as the ununiform excitation distribution and the refractive index fluctuation induced thereby, are averaged over the long light path and, consequently, the production of the laser beam of a satisfactory transverse mode is facilitated.

3) Decrease of impassable region in laser medium and increase and averaging of number of beam duplications: The region allowing no passage of the laser beam in the laser rod is small, the number of beam duplications in various parts inside the laser rod is large as compared with the conventional laser rod of a multiple light path, the change of the number of spatial duplications is small, and the distribution of the number of duplications is averaged.

4) Elimination of spatial hole burning: The conventional solid-state laser oscillator using a standing wave type resonator has suffered the laser rod to incur a spatial hole burning owing to the standing wave of the laser beam. Since the oscillation of the single vertical mode is consequently obstructed when the output is high, the acquisition of the single vertical mode oscillation has necessitated a laser resonator, such as a ring laser or a twist mode laser. Even the standing wave type laser resonator is enabled, by using the laser medium of the current type possessing a multiple light path, to suppress the spatial hole burning because the standing waves from various directions are overlapped inside the laser rod. Thus, even the standing wave type resonator is enabled to easily acquire a single frequency oscillation of a high output by simply having a vertical mode selecting device incorporated therein.

5) Decrease of fluence in laser oscillator: Owing to the rise of the gain of the laser medium, it is made possible to lower the Q value of the resonator for acquiring the optimum output and, consequently, decrease the intensity of the laser beam in the resonator (fluence) necessary for acquiring the prescribed output. This fact designates that the energy of the laser beam lost by the optical loss of the resonator can be decreased and the possibility of the optical device in the resonator mentioned above being deteriorated by the injury inflicted by the laser beam can be suppressed.

Now, the characteristic of the case of applying this invention to the nonlinear optical device will be described below.

It is known that generally the nonlinear optical crystal is not easily obtained in a large size and in an optically uniform state. Even in the case of a nonlinear optical crystal which reveals only meager optical lack of uniformity, it is known that the light generated or converted by the use of this nonlinear optical crystal is liable to incur confusion of the mode thereof because the lack of uniformity inflicts a great influence on the nonlinear - optical effect of the crystal The nonlinear optical device using the nonlinear optical crystal generally possesses a small nonlinear optical coefficient and, therefore, necessitates an input light of a high energy density for the purpose of obtaining a sufficient output due to the nonlinear optical effect. When the nonlinear optical crystal absorbs light even slightly, the absorbed light gives rise to a large lack of uniform temperature distribution. This temperature distribution results in deteriorating the mode of the generated light as by affecting the optical properties of the crystal, such as refractive index, disrupting the uniformity thereof, and disordering the phase matching conditions. In contrast therewith, the nonlinear optical device of the current type, similarly to the preceding case regarding the laser medium, derives a large nonlinear optical effect from the great length of interaction, brings an effect of averaging the influences inflicted by the lack of uniformity of temperature distribution on the laser beam over the long light path, and facilitates the acquisition of a converted light of good transverse mode.

Embodiment 2:

In the disposition of a light path in which the incident light and the emitted light of the solid-state laser medium coincide, a monolithic solid-state laser is formed by altering the injection and emission parts of Surface A to a spherical surface 12 having attached thereto a diffusion shell 13 as illustrated in FIG. 21. The monolithic solid-state laser can be similarly formed by furnishing Surface B (not Surface A) with a spherical output part. It is evident that the monolithic solid-state laser is similarly formed by imparting a flat surface or a spherical surface to the surfaces corresponding to Surface D or Surface E added anew to the side face of the slab as the incident part and the emission part of Surface A and Surface B of FIG. 2 and altering them to the surfaces having a diffusion shell and a highly reflecting film attached thereto, respectively.

Embodiment 3:

By connecting the solid-state laser media in series as illustrated in FIG. 22 or FIG. 23, it is made possible to obtain a still higher laser gain and a laser beam of high output. It is evident that a ring laser can be easily configured by so adding reflectors to the configuration of FIG. 22 or FIG.23 as to circulate the light path therethrough.

Embodiment 4:

A surface corresponding to Surface D of FIG. 2 is given a flat surface and a saturable absorption crystal plate 14, such as of $Cr^{4+}$:YAG, is joined to the flat surface by the diffusion bonding method or the optical contact as illustrated in FIG. 26. A monolithic solid-state laser of the passive type Q switch oscillation is formed by giving a spherical surface to the side opposite to the side joined to the crystal plate and attaching a diffusion shell 13 thereto, thereby converting it into an output mirror. The Q switch oscillation can be similarly obtained by furnishing a surface like Surface E in Fig. 2 on Surface A or Surface B with the same crystal plate and diffusion shell similarly to the abovementioned surface corresponding to Surface D of FIG. 2. Otherwise, the Q switch oscillation can be formed by giving a flat surface to the surface corresponding to Surface D added to Surface A of FIG. 2, disposing the crystal plate output part thereon in the same manner, giving flat surfaces or spherical surfaces to the surfaces corresponding to the opposite side of the crystal plate and the added surface of Surface B, and attaching a diffusion shell or a highly reflecting film thereto. Conversely, it is permissible to use Surface A and Surface B in the place of the surfaces to which a crystal plate is attached.

Embodiment 5:

A flat surface or a spherical surface is given to a surface corresponding to Surface D of FIG. 2 and a diffusion shell 13 on a lens-like plate 15 destined to form an output mirror is attached to a laser oscillator as illustrated in FIG. 27. Otherwise, a flat surface is given to a surface corresponding to Surface D and a flat reflector or a spherical reflector furnished with a diffusion shell is joined thereto, similarly to the preceding case, by the diffusion bonding method or the optical contact. Thus, the output mirror of the laser oscillator is formed on Surface D mentioned above. Then, in the reflecting film 5 part of Surface A, the saturable absorption crystal plate 16 is interposed between the reflecting film 5 and the laser medium 1. That is, the saturable absorption crystal plate 16 furnished with the highly reflecting film 5 is bonded, similarly to the preceding case, by the diffusion bonding method or the optical contact. Also in the laser oscillator of this configuration, the Q switch oscillation can be attained. It is evident that the same action is obtained by providing Surface B instead of Surface A with the saturable absorption crystal plate 16 furnished with a highly reflecting film.

Embodiment 6:

As illustrated in FIG. 28, a flat surface is given to a surface corresponding to Surface D of FIG. 2 and a nonlinear optical crystal plate 17 furnished with a dichroic mirror 18 possessing a laser oscillation wavelength, exhibiting high reflection and passing light to a second higher harmonic wave is joined thereto, similarly to the preceding case, by the diffusion bonding method or the optical contact. Thus, the output mirror for the laser oscillator is formed on Surface D. Then, in the reflecting film part of Surface A, the saturable absorption crystal plate 16 is interposed between the highly reflecting film 5 and the laser medium. That is, the saturable absorption crystal plate furnished with the highly reflecting film 5 is joined, similarly to the preceding case, by the diffusion bonding method or the optical contact. By using the laser oscillator of this configuration, it is made possible to attain passive type Q switch oscillation, consequently obtain a laser pulse of great peak strength, and acquire a higher harmonic wave of an oscillation wavelength as well by means of the nonlinear optical crystal plate 17. It is evident that again in this case, the same action is derived from disposing the saturable absorption crystal plate furnished with a highly reflecting film on a surface corresponding to Surface B instead of Surface A.

Firstly, the advantage of the solid-state laser medium using the light path formed by multiple reflection on the three reflecting surfaces contemplated by this invention resides in the fact that the light path having a far greater length than the laser medium (laser rod) can be disposed within the relevant device. Consequently, the produced laser medium possesses a large laser gain in spite of a small cross sectional area for induced emission Further, the laser medium requires the antireflection film exclusively in the incidence and emission parts and the laser beam passes this antireflection film solely during the course of incidence and emission. The decrease of the laser gain due to the optical loss of the antireflection film on the end face of the optical device which is entailed in the case of using an external reflector does not occur in the solid-state laser medium.

Then, the advantage of the nonlinear optical medium using the light path formed by multiple reflection on the three reflecting surfaces contemplated by this invention resides in the fact that the large nonlinear optical effect can be obtained by utilizing the great length of interaction even when the crystal for the nonlinear optical device possesses a small nonlinear optical coefficient.

Secondly, the fact that the individual light paths forming the multiple light path are overlapped with the positions and the directions thereof spatially varied little by little brings the effect of averaging or compensating various forms of lack of uniformity in the excitation distribution, laser gain distribution, refractive index distribution and spatial hole burning in the laser medium.

Thirdly, this invention enjoys the easiness of production. The device of this invention may be completed by the optical polishing of at least three surfaces and the treatment of joining optical films to two surfaces. Generally, the polishing process easily attains angular accuracy but does not easily attain high dimensional accuracy. The current laser medium only necessitates angular accuracy but does not require this accuracy to be on a high level. The production is easy because no dimensional accuracy is needed.

**Claims**

1. A laser comprising a laser resonator arrangement (10, 11) and a slab type solid-state laser medium (1) disposed in the laser resonator arrangement (10, 11), which arrangement defines a position and direction of an incident resonant laser beam at the laser medium in use, the slab type solid-state laser medium (1) being furnished on side faces thereof with three reflecting surfaces, and allowing therein a light path for optical amplification attained by multiple reflection on the reflecting surfaces, wherein the three reflecting surfaces comprise Surface C serving as a surface on which the incident laser beam reflects first in the solid-state laser medium, Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes an angle of intersection between Surface C and Surface A or extended surfaces thereof, **characterized in that**: Angle C is larger than each of Angle A and Angle B and the laser medium (1) and laser resonator arrangement (10, 11) are together arranged so that, in use the incident laser beam is injected into the solid-state laser medium (1) so that the light path formed for optical amplification in the solid-state laser medium (1) includes a plurality of consecutive unit reflections without interruption, each unit reflection comprising reflections on Surface C, Surface B, Surface C and Surface A sequentially in the order mentioned and **in that** the path followed inside the laser medium (1) during at least one of the unit reflections is different from the path followed during at least one other of the unit reflection.

2. A laser according to claim 1, wherein the laser medium (1) has, when Surface A, Surface B and Surface C have lengths so defined as to enable surfaces orthogonally intersecting the three reflecting surfaces provided on the side faces of the slab type solid-state laser medium (1) to encircle an outer periphery of cut surfaces of the laser medium (1), a configuration that allows a first part (4) for passing the laser beam to be provided in a region of a length of not more than half of the length of Surface A and a remaining region of Surface A to be used for a reflecting surface (5) which is more reflective than said first part, allows a second part (4) for passing the laser beam to be provided in a region of a length of not more than half of the length of Surface B and a remaining region of Surface B to be used for a reflecting surface (5) which is more reflective than said second part, and allows the laser beam to be injected through the first or second (4) part and to be emitted through the second or first (4) part.

3. A laser according to claim 1, wherein the reflection on Surface C is total reflection, and the solid-state laser medium (1) allows excitation light to be injected through Surface C.

4. A laser according to claim 1, wherein Surface A, Surface B or Surface C is covered with an antireflection coating serving as a film for passing excitation light and the solid-state laser medium is excitable with the light which has passed through the antireflection film.

5. A laser according to claim 1, further having, near Angle A, Angle B or Angle C, Surface D or Surface D and Surface E different from Surface A, Surface B and Surface C, wherein a portion of Surface A or Surface B cut off by Surface D or Surface E has a length of not more than half of the length of Surface A or Surface B as viewed from a direction of a vertical plane of the solid-state laser medium and wherein, in use, the laser beam is injected, emitted or reflected through Surface D or Surface E.

6. A laser according to claim 5, wherein Surface D or Surface E is a flat or spherical surface, and Surface D is furnished with a lightly permeable membrane intended to serve as an output mirror of a laser resonator or Surface E is furnished with a highly reflective membrane intended to serve as an end mirror.

7. A laser according to claim 5, wherein Surface D is a flat surface, and a crystal plate (14) including that of $Cr^{4+}$:YAG that is a saturable absorber of the laser beam is joined to the flat surface by diffusion bonding or optical contact and a slightly permeable membrane or a highly reflective membrane is attached to a surface opposite to the flat surface so as to serve as an output mirror or an end mirror for a laser resonator.

8. A laser according to any one of claims 1 to 7, wherein the laser medium is produced with a material resulting from doping at least one of YAG, YLF, $YVO_4$, KGW, $Al_2O_3$, YSGG, GSGG, LSB, laser glass and $LiNbO_3$, with a solid-state laser active device.

9. An optical arrangement comprising a laser and a slab type nonlinear optical device (21), the laser being arranged to provide an incident laser beam at the slab type nonlinear optical device (21), which is furnished on side faces thereof with three reflecting surfaces and allows therein a light path for nonlinear optical effects attained by multiple reflection on the reflecting surfaces, wherein the three reflection surfaces comprise Surface C serving as a surface on which the incident laser beam reflects first in the nonlinear optical device, Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes and angle of intersection between Surface C and Surface A or extended surfaces thereof, **characterized in that** Angle C is larger than each of Angle A and Angle B and the laser and the nonlinear optical device (21) are together arranged so that, in use, the incident beam is injected into the nonlinear optical device (21) so that the light path formed for nonlinear optical effects in the nonlinear optical device (21) includes a plurality of consecutive unit reflections without interruption, each unit reflection comprising reflections on Surface C, Surface B, Surface C and Surface A sequentially in the order mentioned and **in that** the path followed inside the non linear optical device (21) during at least one of the unit reflections is different from the path followed during at least one other of the unit reflections.

10. An optical arrangement according to claim 9, wherein the nonlinear optical device (21) has, when Surface A, Surface B and Surface C have lengths so defined as to enable surfaces orthogonally intersecting the three reflecting surfaces provided on the side faces of the slab type nonlinear optical device to encircle an outer periphery of cut surfaces of the nonlinear optical device, a configuration that allows a first part (24) for passing the laser beam to be provided in a region of a length of not more than half of the length of Surface A and a remaining region of Surface A to be used for a reflecting surface (25) which is more reflective than said first part, allows a second part (24) for passing the laser beam to be provided in a region of a length of not more than half of the length of Surface B and a remaining region of Surface B to be used for a reflecting surface (25) which is more reflective than said second part, and allows the laser beam to be injected through the first or second part and to be emitted through the second or first part.

11. An optical arrangement according to claim 9, wherein Surface A, Surface B or Surface C has attached thereto a multilayer dielectric film destined to serve as a film for reflecting light having undergone wavelength conversion with the incident laser beam.

12. An optical arrangement according to claim 9, the nonlinear optical device further having, near Angle A, Angle B or Angle C, Surface D or Surface D and Surface E different from Surface A, Surface B and Surface C, wherein a portion of Surface A or Surface B cut off by Surface D or Surface E has a length not more than half of the length of Surface A or Surface B as viewed from a direction of a vertical plane of the nonlinear optical device and wherein, in use, the laser beam is injected, emitted or reflected through Surface D or Surface E.

13. An optical arrangement according to claim 12, wherein Surface D or Surface E is a flat or spherical surface.

14. An optical arrangement according to any one of claims 9 to 13, wherein the nonlinear optical device uses a nonlinear optical crystal having a Z axis disposed normal to a plane including the light path provided in the nonlinear optical device and is arranged to have its temperature adjusted with a temperature adjuster for retaining a phase matching temperature.

**15.** A method of using a slab type solid-state laser medium (1) comprising the step of causing a laser beam to be incident on the laser medium, the slab type solid-state laser medium (1) being furnished on side faces thereof with three reflecting surfaces and allowing therein a light path for optical amplification attained by multiple reflection on the reflecting surfaces, wherein the three reflecting surfaces comprise Surface C serving as a surface on which the incident laser beam reflects first in the solid-state laser medium, Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes an angle of intersection between Surface C and Surface A or extended surfaces thereof, the method **characterized in that**: Angle C is larger than each of Angle A and Angle B and by the step of injecting the incident laser beam into the solid-state laser medium (1) in such a way so that the light path formed for optical amplification in the solid-state laser medium (1) includes a plurality of consecutive unit reflections without interruption, each unit reflection comprising reflections on Surface C, Surface B, Surface C and Surface A sequentially in the order mentioned and **in that** the path followed inside the laser medium (1) during at least one of the unit reflections is different from the path followed during at least one other of the unit reflections.

**16.** A method of using a slab type nonlinear optical device (21) comprising the step of causing a laser beam to be incident on the nonlinear optical device, the slab type nonlinear optical device being furnished on side faces thereof with three reflecting surfaces and allowing therein a light path for nonlinear optical effects attained by multiple reflection on the reflecting surfaces wherein the three reflection surfaces comprise Surface C serving as a surface on which the incident laser beam reflects first in the nonlinear optical device, Surface B serving as a surface on which the beam reflected on Surface C is subsequently reflected and Surface A serving as a remaining surface, and wherein Angle C denotes an angle of intersection between Surface A and Surface B or extended surfaces thereof, Angle A denotes an angle of intersection between Surface B and Surface C or extended surfaces thereof and Angle B denotes and angle of intersection between Surface C and Surface A or extended surfaces thereof, the method **characterized in that** Angle C is larger than each of Angle A and Angle B and by the step of injecting the incident beam into the nonlinear optical device (21) so that the light path formed for nonlinear optical effects in the nonlinear optical device (21) includes a plurality of consecutive unit reflections without interruption, each unit reflection comprising reflections on Surface C, Surface B, Surface C and Surface A sequentially in the order mentioned and **in that** the path followed inside the nonlinear optical device during at least one of the unit reflections is different from the path followed during at least one other of the unit reflections.

**Patentansprüche**

**1.** Ein Laser, umfassend eine Laserresonatoranordnung (10, 11) und ein plattenförmiges Festkörperlasermedium (1), das in der Laserresonatoranordnung (10, 11) angeordnet ist, während die Anordnung eine Position und eine Richtung eines auf das Lasermedium bei Verwendung einfallenden Resonanzlaserstrahls definiert, wobei das plattenförmig Festkörperlasermedium (1) an Seitenflächen davon mit drei reflektierenden Oberflächen ausgestattet ist und darin einen Lichtweg für eine optische Verstärkung erlaubt, die durch Mehrfachreflexion an den reflektierenden Oberflächen erreicht wird, während die drei reflektierenden Oberflächen umfassen Oberfläche C, die als eine Oberfläche dient, an der der einfallende Laserstrahl zuerst in dem Festkörperlasermedium reflektiert wird, Oberfläche B, die als eine Oberfläche dient, an der der an Oberfläche C reflektierte Strahl nachfolgend reflektiert wird, und Oberfläche A, die als eine übrigbleibende Oberfläche dient, wobei Winkel C einen Schnittwinkel zwischen Oberfläche A und Oberfläche B oder ausgedehnten Oberflächen davon angibt, Winkel A einen Schnittwinkel zwischen Oberfläche B und Oberfläche C oder ausgedehnten Oberflächen davon angibt und Winkel B einen Schnittwinkel zwischen Oberfläche C und Oberfläche A oder ausgedehnten Oberflächen davon angibt, **dadurch gekennzeichnet, dass** Winkel C größer ist als jeder der Winkel A und B, und dass das Lasermedium (1) und die Laserresonatoranordnung (10, 11) zusammen so angeordnet sind, dass bei Verwendung der einfallenden Laserstrahl in das Festkörperlasermedium (1) eingestrahlt wird, so dass der für eine optische Verstärkung in dem Festkörperlasermedium (1) gebildet Lichtweg eine Mehrzahl an aufeinanderfolgenden Einheitsreflexionen ohne Unterbrechung umfasst, während jede Einheitsreflexion Reflexionen an Oberfläche C, Oberfläche B, Oberfläche C und Oberfläche A aufeinanderfolgend in der genannten Reihenfolge umfasst, sowie dadurch, dass der Weg, dem innerhalb des Lasermediums (1) während mindestens einer der Einheitsreflexionen gefolgt wird, verschieden ist von dem Weg, dem während mindestens einer anderen der Einheitsreflexionen gefolgt wird.

**2.** Ein Laser gemäß Anspruch 1, während, wenn Oberfläche A, Oberfläche B und Oberfläche C Längen aufweisen, die so definiert sind, um Oberflächen zu erlauben, die drei an den Seitenflächen des plattenförmigen Festkörperlasermediums (1) bereitgestellten reflektierenden Oberflächen orthogonal zu schneiden, um einen äußeren Rand an Schnittoberflächen des Lasermediums (1) zu umgeben, das Lasermedium (1) oberflächen des Lasermediums (1) zu umgeben, das Lasermedium (1) eine Konfiguration aufweist, die es erlaubt, einen ersten Teil (4) zum Passieren des Laserstrahls in einem Bereich von einer Länge von nicht mehr als der Hälfte der Länge von Oberfläche A bereitzustellen sowie einen übrigbleibenden Bereich von Oberfläche A als eine Reflexionsoberfläche (5) zu verwenden, der stärker reflektierend ist als der erste Teil, sie erlaubt es, einen zweiten Teil (4) zum Passieren des Laserstrahls in einem Bereich von einer Länge von nicht mehr als der Hälfte der Länge von Oberfläche B bereitzustellen, sowie einen übrigbleibende Bereich von Oberfläche B als eine reflektierende Oberfläche (5) zu verwenden, der stärker reflektierend ist als der zweite Teil, und sie erlaubt es, dass der Laserstrahl durch den ersten oder zweiten (4) Teil eintritt und durch den zweiten oder ersten (4) Teil emittiert.

3. Ein Laser gemäß Anspruch 1, während die Reflexion an Oberfläche C eine Totalreflexion ist und das Festkörperlasermedium (1) erlaubt es, Anregungslicht durch Oberfläche C einzustrahlen.

4. Ein Laser gemäß Anspruch 1, während Oberfläche A, Oberfläche B oder Oberfläche C mit einer Antireflexionsschicht bedeckt ist, die als eine Schicht zum Passieren von Anregungslicht dient, und das Festkörperlasermedium ist anregbar mit dem Licht, das die Antireflexionsschicht passiert hat.

5. Ein Laser gemäß Anspruch 1, weiterhin aufweisend, in der Nähe von Winkel A, Winkel B oder Winkel C, eine Oberfläche D oder eine Oberfläche D und eine Oberfläche E, die verschieden sind von Oberfläche A, Oberfläche B und Oberfläche C, während ein durch Oberfläche D oder Oberfläche E abgeschnittener Bereich von Oberfläche A oder Oberfläche B eine Länge von nicht mehr als der Hälfte der Länge von Oberfläche A oder Oberfläche B aufweist, wenn sie aus einer Richtung von einer vertikalen Ebene des Festkörperlasermediums betrachtet werden, während bei Verwendung der Laserstrahl durch Oberfläche D oder Oberfläche E eingestrahlt wird, emittiert wird oder reflektiert wird.

6. Ein Laser gemäß Anspruch 5, während Oberfläche D oder Oberfläche E eine ebene oder sphärische Oberfläche ist, und Oberfläche D ist ausgestattet mit einer leicht permeablen Membran, die vorgesehen ist, um als ein Auslassspiegel eines Laserresonators zu dienen, oder Oberfläche E ist ausgestattet mit einer hochreflektierenden Membran, die vorgesehen ist, um als ein Endspiegel zu dienen.

7. Ein Laser gemäß Anspruch 5, während Oberfläche D eine ebene Oberfläche ist, und eine Kristallplatte (14), die $CR^{4+}$:YAG aufweist, was ein sättigbarer Absorber des Laserstrahls ist, ist mit der ebenen Oberfläche mittels Diffussionsbonden oder optischem Kontakt verbunden, und eine leicht permeable Membran oder eine hochreflektierende Membran ist an einer Oberfläche entgegengesetzt der ebenen Oberfläche angeordnet, um als ein Auslassspiegel oder ein innerer Endspiegel für einen Laserresonator zu dienen.

8. Ein Laser gemäß einem der Ansprüche 1 bis 7, während das Lasermedium hergestellt ist mit einem Material, das aus dem Dotierten von mindestens einem von YAG, YLF, $YVO_4$, KGW, $Al_2O_3$, YSGG, GSGG, LSB, Laserglas und $LiNbO_3$ mit einer festkörperlaseraktiven Vorrichtung resultiert.

9. Eine optische Anordnung, umfassend einen Laser und eine plattenförmige nicht lineare optische Vorrichtung (21), während der Laser angeordnet ist, um einen einfallenden Laserstrahl an der plattenförmigen nicht linearen optischen Vorrichtung (21) bereitzustellen, die an drei Seitenflächen davon mit drei reflektierenden Oberflächen ausgestattet ist und darin einen Lichtweg für nicht lineare optische Effekte erlaubt, die durch Mehrfachreflexion an den reflektierenden Oberflächen erreicht werden, während die drei reflektierenden Oberflächen umfassen Oberfläche C, die als eine Oberfläche dient, an der der einfallende Laserstrahl zuerst in der nicht linearen optischen Vorrichtung reflektiert wird, Oberfläche B, die als eine Oberfläche dient, an der der an Oberfläche C reflektierte Strahl nachfolgend reflektiert wird, und Oberfläche A, die als eine übrigbleibende Oberfläche dient, wobei Winkel C einen Schnittwinkel zwischen Oberfläche A und Oberfläche B oder ausgedehnten Oberflächen davon angibt, Winkel A einen Schnittwinkel zwischen Oberfläche B und Oberfläche C oder ausgedehnten Oberflächen davon angibt und Winkel B einen Schnittwinkel zwischen Oberfläche C und Oberfläche A oder ausgedehnten Oberflächen davon angibt, **dadurch gekennzeichnet, dass** Winkel C größer ist als jeder der Winkel A und B, und dass der Laser und die nicht lineare optische Vorrichtung (21) zusammen so angeordnet sind, dass bei Verwendung der einfallende Laserstrahl in die nicht lineare optische Vorrichtung (21) eingestrahlt wird, so dass der für nicht lineare optische Effekte in der nicht linearen optischen Vorrichtung (21) gebildet Lichtweg eine Mehrzahl an aufeinanderfolgenden Einheitsreflexionen ohne Unterbrechung umfasst, während jede Einheitsreflexion Reflexionen an Oberfläche C, Oberfläche B, Oberfläche C und Oberfläche A aufeinanderfolgend in der genannten Reihenfolge umfasst, sowie dadurch, dass der Weg, dem innerhalb der nicht linearen optischen Vorrichtung (21) während mindestens einer der Einheitsreflexionen gefolgt wird, verschieden ist von dem Weg, dem während mindestens einer anderen der Einheitsreflexioncn gefolgt wird.

10. Eine optische Anordnung gemäß Anspruch 9, während, wenn Oberfläche A, Oberfläche B und Oberfläche C Längen aufweisen, die so definiert sind, um Oberflächen zu erlauben, die drei an den Seitenflächen der plattenförmigen nicht linearen optischen Vorrichtung bereitgestellten reflektierenden Oberflächen orthogonal zu schneiden, um einen äußeren Rand an Schnittoberflächen der nicht linearen optischen Vorrichtung zu umgeben, die nicht lineare optische Vorrichtung (21) eine Konfiguration aufweiset, die es erlaubt, einen ersten Teil (24) zum Passieren des Laserstrahls in einem Bereich von einer Länge von nicht mehr als der Hälfte der Länge von Oberfläche A bereitzustellen sowie einen übrigbleibenden Bereich von Oberfläche A als eine Reflexionsoberfläche (25) zu verwenden, der stärker reflektierend ist als der erste Teil, sie erlaubt es, einen zweiten Teil (24) zum Passieren des Laserstrahls in einem Bereich von einer Länge von nicht mehr als der Hälfte der Länge von Oberfläche B bereitzustellen, sowie einen übrigbleibenden Bereich von Oberfläche B als eine reflektierende Oberfläche (25) zu verwenden, der stärker reflektierend ist als der zweite Teil, und sie erlaubt es, dass der Laserstrahl durch den ersten oder zweiten Teil eintritt und durch den zweiten oder ersten Teil emittiert.

11. Eine optische Anordnung gemäß Anspruch 9, während Oberfläche A, Oberfläche B oder Oberfläche C eine daran befestigte dielektrische Multilayerschicht aufweist, die vorgesehen ist, um als eine Schicht zum Reflektieren von Licht zu dienen, das eine Wellenlängenumwandlung mit dem einfallenden Laserstrahl durchlaufen hat.

12. Eine optische Anordnung gemäß Anspruch 9, während die nicht lineare optische Vorrichtung weiterhin in der Nähe von Winkel A, Winkel B oder Winkel C, eine Oberfläche D oder eine Oberfläche D und eine Oberfläche E aufweist, die verschieden sind von Oberfläche A, Oberfläche B und Oberfläche C, während ein durch Oberfläche D oder Oberfläche E abgeschnittener Bereich von Oberfläche A oder Oberfläche B eine Länge von nicht mehr als der Hälfte der Länge von Oberfläche A oder Oberfläche B aufweist, wenn sie aus einer Richtung von einer vertikalen Ebene der nicht linearen optischen Vorrichtung betrachtet wird, während bei Verwendung der Laserstrahl durch Oberfläche D oder Oberfläche E eingestrahlt wird, emittiert wird oder reflektiert wird.

13. Eine optische Anordnung gemäß Anspruch 12, während Oberfläche D oder Oberfläche E eine ebene oder sphärische Oberfläche ist.

14. Eine optische Anordnung gemäß einem der Ansprüche 9 bis 13, während die nicht lineare optische Vorrichtung einen nicht linearen optischen Kristall verwendet, der eine Z-Achse aufweist, die senkrecht zu einer Ebene angeordnet ist, die den Lichtweg umfasst, der in der nicht linearen optischen Vorrichtung bereitgestellt ist, und angeordnet ist, um seine Temperatur mit einem Temperatureinsteller zum Halten einer Phasenanpassungstemperatur eingestellt zu haben.

15. Ein Verfahren zum Verwenden eines plattenförmigen Festkörperlasermectiums (1), umfassend die Schritte: Bewirken eines Laserstrahls, der in das Lasermedium einfällt, das plattenförmige Festkörperlasermedium (1) ist an drei Seitenflächen davon mit drei reflektierenden Oberflächen ausgestattet und erlaubt darin einen Lichtweg für eine optische Verstärkung, die mittels Mehrfachreflexion an den reflektierenden Oberflächen erzielt wird, während die drei reflektierenden Oberflächen umfassen Oberfläche C, die als eine Oberfläche dient, an der der einfallende Laserstrahl zuerst in dem Festkörperlasermedium reflektiert wird, Oberfläche B, die als eine Oberfläche dient, an der der an Oberfläche C reflektierte Strahl nachfolgend reflektiert wird, und Oberfläche A, die als eine übrigbleibende Oberfläche dient, wobei Winkel C einen Schnittwinkel zwischen Oberfläche A und Oberfläche B oder ausgedehnten Oberflächen davon angibt, Winkel A einen Schnittwinkel zwischen Oberfläche B und Oberfläche C oder ausgedehnten Oberflächen davon angibt und Winkel B einen Schnittwinkel zwischen Oberfläche C und Oberfläche A oder ausgedehnten Oberflächen davon angibt, **dadurch gekennzeichnet, dass** Winkel C größer ist als jeder der Winkel A und B, und durch den Schritt: Einstrahlen des einfallenden Laserstrahls in das Festkörper Lasermedium, so dass der für eine optische Verstärkung in dem Festkörperlasermedium (1) gebildete Lichtweg eine Mehrzahl an aufeinanderfolgenden Einheitsreflexionen ohne Unterbrechung umfasst, während jede Einheitsreflexion Reflexionen an Oberfläche C, Oberfläche B, Oberfläche C und Oberfläche A aufeinanderfolgend in der genannten Reihenfolge umfasst, sowie dadurch, dass der Weg, dem innerhalb des Lasermediums (1) während mindestens einer der Einheitsreflexionen gefolgt wird, verschieden ist von dem Weg, dem während mindestens einer anderen der Einheitsreflexionen gefolgt wird.

16. Ein Verfahren zum Verwenden einer plattenförmigen nicht linearen optischen Vorrichtung (21), umfassend die Schritte. Bewirken eines Laserstrahls, der in die nicht lineare optische Vorrichtung einfällt, die plattenförmige nicht lineare optische Vorrichtung ist an Seitenflächen davon mit drei reflektierenden Oberflächen ausgestattet und erlaubt darin einen Lichtweg für nicht lineare optische Effekte, die durch Mehrfachreflexion an den reflektierenden Oberflächen erzielt werden, während die drei reflektierenden Oberflächen umfassen Oberfläche C, die als eine Oberfläche dient, an der der einfallende Laserstrahl zuerst in der nicht linearen optischen Vorrichtung reflektiert wird, Oberfläche B, die als eine Oberfläche dient, an der der an Oberfläche C reflektierte Strahl nachfolgend reflektiert wird, und Oberfläche A, die als eine übrigbleibende Oberfläche dient, wobei Winkel C einen Schnittwinkel zwischen Oberfläche A und Oberfläche B oder ausgedehnten Oberflächen davon angibt, Winkel A einen Schnittwinkel zwischen Oberfläche B und Oberfläche C oder ausgedehnten Oberflächen davon angibt und Winkel B einen Schnittwinkel zwischen Oberfläche C und Oberfläche A oder ausgedehnten Oberflächen davon angibt, das Verfahren ist **dadurch gekennzeichnet, dass** Winkel C größer ist als jeder der Winkel A und B, und durch den Schritt: Einstrahlen des einfallenden Laserstrahls in die nicht lineare optische Vorrichtung (21), so dass der für nicht lineare optische Effekte in der nicht linearen optischen Vorrichtung (21) gebildet Lichtweg eine Mehrzahl an aufeinanderfolgenden Einheitsreflexionen ohne Unterbrechung umfasst, während jede Einheitsreflexion Reflexionen an Oberfläche C, Oberfläche B, Oberfläche C und Oberfläche A aufeinanderfolgend in der genannten Reihenfolge umfasst, sowie dadurch, dass der Weg, dem innerhalb der nicht linearen optischen Vorrichtung während mindestens einer der Einheitsreflexionen gefolgt wird, verschieden ist von dem Weg, dem während mindestens einer anderen der Einheitsreflexionen gefolgt wird.

## Revendications

1. Laser comprenant un agencement de résonateur laser (10, 11) et un milieu laser à l'état solide en plaque (1) disposé dans l'agencement de résonateur laser (10, 11), ledit agencement définit une position et direction d'un faisceau laser résonnant incident au milieu laser en utilisation, le milieu laser à l'état solide en plaque (1) étant pourvu sur ses faces latérales de trois surfaces de réflexion, et permettant dans celles-ci un chemin de lumière pour l'amplification optique atteinte par la réflexion multiple sur les surfaces de réflexion, où les trois surfaces de réflexion comprennent la Surface C servant de surface sur laquelle le faisceau lasser incident réfléchit d'abord dans le milieu laser à l'état solide, la Surface B servant de surface sur laquelle le faisceau réfléchi sur la Surface C est réfléchi ensuite et la Surface A servant de surface restante, et où l'Angle C indique un angle d'intersection entre la Surface A et la Surface B ou des surfaces étendues de celles-ci, l'Angle A indique un angle d'intersection entre la Surface B et la Surface C ou des surfaces étendues de celles-ci, et l'Angle B indique un angle d'intersection entre la Surface C et la Surface A ou les surfaces étendues de celles-ci, **caractérisé en ce que**: l'Angle C est plus grand que chacun de l'Angle A et de l'Angle B, et le milieu laser (1) et l'agencement de résonateur laser (10, 11) sont agencés ensemble de façon que, en cours d'utilisation, le faisceau laser incident soit injecté dans le milieu laser à l'état solide (1) de sorte que le chemin de lumière formé pour l'amplification optique dans le milieu laser à l'état solide (1) comporte une pluralité de réflexions unitaires consécutives sans interruption, chaque réflexion unitaire comprenant des réflexions sur la Surface C, la Surface B, la Surface C et la Surface A séquentiellement dans l'ordre mentionné, et **en ce que** le chemin suivi à l'intérieur du milieu laser (1) durant au moins une des réflexions unitaires diffère du chemin suivi durant au moins une autre des réflexions unitaires.

2. Laser selon la revendication 1, dans lequel le milieu laser (1), lorsque la Surface A, la Surface B et la Surface C ont des longueurs définies pour permettre à des surfaces se croisant orthogonalement avec les trois surfaces de réflexion réalisées sur les faces latérales du milieu laser à l'état solide en plaque (1) d'encercler une périphérie extérieure de surface de coupe du milieu laser (1), possède une configuration qui permet à une première partie (4) pour le passage du faisceau lasser à être réalisée dans une région d'une longueur non supérieure à la moitié de la longueur de la Surface A et une région restante de la Surface A à être utilisée pour une surface de réflexion (5) qui réfléchit davantage que ladite première partie, permet à une deuxième partie (4) pour le passage du faisceau laser d'être réalisée dans une région d'une longueur non supérieure à la moitié de la longueur de la Surface B et une région restante de la Surface B à être utilisée pour une surface de réflexion (5) qui réfléchit davantage que ladite deuxième partie, et permet au faisceau laser d'être injecté à travers la première ou deuxième (4) partie et à être émis à travers la deuxième ou première (4) partie.

3. Laser selon la revendication 1, dans lequel la réflexion sur la Surface C est une réflexion totale, et le milieu laser à l'état solide 1 permet à la lumière d'excitation d'être injectée à travers la Surface C.

4. Laser selon la revendication 1, dans lequel la Surface A, la Surface B ou la Surface C est couverte d'un revêtement anti-réflexion servant de film pour le passage de la lumière d'excitation, et le milieu laser à l'état solide peut être excité avec la lumière passant à travers le film anti-réflexion.

**5.** Laser selon la revendication 1, ayant en outre, près de l'Angle A, de l'Angle B ou de l'Angle C, la Surface D ou la Surface D et la Surface E différentes de la Surface A, de la Surface B et de la Surface C, où une portion de la Surface A ou de la Surface B coupée par la Surface D ou la Surface E a une longueur non supérieure à la moitié de la longueur de la Surface A ou de la Surface B, vue d'une direction d'un plan vertical du milieu laser à l'état solide et où, en cours d'utilisation, le faisceau laser est injecté et émis ou réfléchi à travers la Surface D ou la Surface E.

**6.** Laser selon la revendication 5, où la Surface D ou la Surface E est une surface plate ou sphérique, et la Surface D est munie d'une membrane légèrement perméable pour servir de miroir de sortie d'un résonateur laser ou bien la Surface E est munie d'une membrane hautement réfléchissante destinée à servir de miroir final.

**7.** Laser selon la revendication 5, où la Surface D est une surface plate, et une plaque de cristaux (14) incluant celui de Cr$^{4+}$: YAG qui est un absorbeur saturable du faisceau laser est reliée à la surface plate par liaison à diffusion ou contact optique, et une membrane légèrement perméable ou une membrane hautement réfléchissante est fixée à une surface opposée à la surface plate de manière à servir de miroir de sortie ou de miroir final pour un résonateur laser.

**8.** Laser selon l'une quelconque des revendications 1 à 7, dans lequel le milieu laser est produit avec un matériau résultant du dopage d'au moins un de YAG, YLF, YVO$_4$, KGW, Al$_2$O$_3$, YSGG, GSGG, LSB, verre laser et LiNbO$_3$, avec un dispositif actif laser à l'état solide.

**9.** Agencement optique comprenant un laser et un dispositif optique non linéaire en plaque (21), le laser étant agencé pour fournir un faisceau laser incident au dispositif optique non linéaire en plaque (21), qui est muni sur ses faces latérales de trois surfaces de réflexion et permet dans celles-ci un chemin de lumière pour des effets optiques non linéaires atteints par réflexion multiple sur les surfaces de réflexion, où les trois surfaces de réflexion comprennent la Surface C servant de surface sur laquelle le faisceau laser incident réfléchit d'abord dans le dispositif optique non linéaire, la Surface B servant de surface sur laquelle le faisceau réfléchi sur la Surface C est ensuite réfléchi et la Surface A servant de surface restante, et où l'Angle C indique un angle d'intersection entre la Surface A et la Surface B ou les surfaces étendues de celles-ci, l'Angle A indique un angle d'intersection entre la Surface B et la Surface C ou les surfaces étendues de celles-ci, et l'Angle B indiquent un angle d'intersection entre la Surface C et la Surface A ou les surfaces étendues de celles-ci, **caractérisé en ce que** l'Angle C est plus grand que chacun des Angles A et B, et le laser et le dispositif optique non linéaire (21) sont agencés ensemble de façon que, en cours d'utilisation, le faisceau incident soit injecté dans le dispositif optique non linéaire (21) de façon que le chemin de lumière formé pour les effets optiques non linéaires dans le dispositif optique non linéaire (21) comprennent une pluralité de réflexions unitaires consécutives sans interruption, chaque réflexion unitaire comprenant des réflexions sur la Surface C, la Surface B, la Surface C et la Surface A séquentiellement dans l'ordre mentionné, et **en ce que** le chemin suivi à l'intérieur du dispositif optique non linéaire (21) durant au moins une des réflexions unitaires est différent du chemin suivi durant au moins une autre des réflexions unitaires.

**10.** Agencement optique selon la revendication 9, dans lequel le dispositif optique non linéaire (21), lorsque la Surface A, la Surface B et la Surface C ont des longueurs définies de façon à permettre à des surfaces se croisant orthogonalement avec les trois surfaces de réflexion réalisées sur les faces latérales du dispositif optique non linéaire en plaque pour encercler une périphérie extérieure des surfaces de coupe du dispositif optique non linéaire, possède une configuration qui permet à une première partie (24) pour le passage du faisceau laser à réaliser dans une région d'une longueur non supérieure à la moitié de la longueur de la Surface A et une région restante de la Surface A à utiliser pour une surface de réflexion (25) qui réfléchit davantage que ladite première partie, permet à une deuxième partie (24) pour le passage du faisceau laser d'être réalisée dans une région d'une longueur non supérieure à la moitié de la longueur de la Surface B et une région restante de la Surface B d'être utilisée pour une surface de réflexion (25) qui réfléchit davantage que ladite deuxième partie et permet au faisceau laser d'être injecté à travers la première ou deuxième partie et d'être émis à travers la deuxième ou première partie.

**11.** Agencement optique selon la revendication 9, dans lequel est attaché à la Surface A, la Surface B ou la Surface C un film diélectrique multicouche destiné à servir de film pour la réflexion de la lumière ayant subi une conversion de longueur d'onde avec le faisceau laser incident.

**12.** Agencement optique selon la revendication 9, le dispositif optique non linéaire ayant en outre près de l'Angle A, de l'Angle B ou de l'Angle C, une Surface D ou Surface D et Surface E différentes de la Surface A, de la Surface B et de la Surface C, où une portion de la Surface A ou de la Surface B coupée par la Surface D ou la Surface E a une longueur non supérieure à la moitié de la longueur de la Surface A ou de la Surface B vue d'une direction d'un plan vertical du dispositif optique non linéaire et dans lequel, en cours d'utilisation, le faisceau laser est injecté, émis ou réfléchi par la Surface D ou la Surface E.

13. Agencement optique selon la revendication 12, dans lequel la Surface D ou la Surface E est une surface plate ou sphérique.

14. Agencement optique selon l'une quelconque des revendications 9 à 13, dans lequel le dispositif optique non linéaire utilise un cristal optique non linéaire ayant un axe Z disposé perpendiculairement à un plan incluant le chemin de lumière réalisé dans le dispositif optique non linéaire et est agencé de façon que sa température soit ajustée avec un organe d'ajustement de température pour retenir une température correspondant à la phase.

15. Procédé d'utilisation d'un milieu laser à l'état solide en plaque (1) comprenant l'étape consistant à amener un faisceau laser à être incident sur le milieu laser, le milieu laser à l'état solide en plaque (1) présentant à ses faces latérales trois surfaces de réflexion et permettant dans celles-ci un chemin de lumière pour une amplification optique atteinte par réflexion multiple sur les surfaces de réflexion, où les trois surfaces de réflexion comprennent la Surface C servant de surface sur laquelle le faisceau laser incident réfléchi d'abord dans le milieu laser à l'état solide, la Surface B servant de surface sur laquelle le faisceau réfléchi sur la Surface C est ensuite réfléchi, et la Surface A servant de surface restante, et où l'Angle C indique un angle d'intersection entre la Surface A et la Surface B ou des surfaces étendues de celles-ci, l'Angle A indique un angle d'intersection entre la Surface B et la Surface C ou des surfaces étendues de celles-ci, et l'Angle B indique un angle d'intersection entre la Surface C et la Surface A ou les surfaces étendues de celles-ci, la méthode étant **caractérisée en ce que**: l'Angle C est plus grand que chacun de l'Angle A et de l'Angle B, et par l'étape consistant à injecter le faisceau laser incident dans le milieu laser à l'étape solide (1) de telle manière que le chemin de lumière formé pour l'amplification l'optique dans le milieu laser à l'état solide (1) comporte une pluralité de réflexions unitaires consécutives sans interruption, chaque réflexion unitaire comprenant des réflexions sur la Surface C, la Surface B, la Surface C et la Surface A séquentiellement dans l'ordre mentionné, et **en ce que** le chemin suivi à l'intérieur du milieu laser (1) durant au moins une des réflexions unitaires est différent du chemin suivi durant au moins une autre des réflexions unitaires.

16. Procédé d'utilisation d'un dispositif optique non linéaire en plaque (21) comprenant l'étape consistant à amener un faisceau laser à être incident sur le dispositif optique non linéaire, le dispositif optique non linéaire en plaque présentant sur ses faces latérales trois surfaces de réflexion et permettant dans celles-ci un chemin de lumière pour des effets optiques non linéaires atteints par réflexion multiple sur les surfaces de réflexion, où les trois surfaces de réflexion comprennent la Surface C servant de surface sur laquelle le faisceau laser incident réfléchit d'abord dans le dispositif optique non linéaire, la Surface B servant de surface sur laquelle le faisceau réfléchi sur la Surface C est ensuite réfléchi, et la Surface A servant de surface restante, et où l'Angle C indique un angle d'intersection entre la Surface A et la Surface B ou les surfaces étendues de celles-ci, l'Angle A indique un angle d'intersection entre la Surface B et la Surface C ou des surfaces étendues de celles-ci, et l'Angle B indique un angle d'intersection entre la Surface C et la Surface A ou les surfaces étendues de celles-ci, le procédé étant **caractérisé en ce que** l'Angle C est plus grand que chacun des Angles A et B, et par l'étape consistant à injecter le faisceau incident dans le dispositif optique non linéaire (21) de façon que le chemin de lumière formé pour des effets optiques non linéaires dans le dispositif optique non linéaire (21) comprenne une pluralité de réflexions unitaires consécutives sans interruption, chaque réflexion unitaire comprenant des réflexions sur la Surface C, la Surface B, la Surface C et la Surface A séquentiellement dans l'ordre mentionné, et **en ce que** le chemin suivi à l'intérieur du dispositif optique non linéaire durant au moins une des réflexions unitaires diffère du chemin suivi durant au moins une autre des réflexions unitaires.

## Fig. 1(a)

apex C

α

2

surface
A

5

5    surface
B           4      3

∠C

apex A

∠A

4

1

surface
C

∠B

apex B

β

α =91      β =45.5.

## Fig. 1(b)

3    surface
C

1

2

A

6

Fig. 2

PRIOR ART

Fig. 3

Fig. 4

## Fig. 5

Fig. 6

# Fig. 7

# PRIOR ART

in

out

# Fig. 8

## PRIOR ART

Fig. 9

3

out

5

4

2

in

1

5

Fig. 10

5

3

out

4

1

5

5

4

2

in

Fig. 11

3-1 3-2
3-3
3-4
3-5

out

2-5
2-4
2-3
2-2
2-1

in

## Fig. 12

## Fig. 13

Fig. 14

surface B

5

in

out

2

3

4

surface
A

surface
C

1

5

Fig. 15

surface
B

5

2

4

3

φ

surface
A

surface
C

1

5

ω

## Fig. 16

surface
B

1

surface
A

surface
C

8

7

Fig. 17

## Fig. 18

Fig. 19

26

23

26

z
axis

22

21

Fig. 20

Fig. 21

## Fig. 22

## Fig. 23

Fig. 24    PRIOR ART

## Fig. 25    PRIOR ART

Cylindrical
Mirror

Spherical
Mirror

Nd:YLF Gain Module

Acouto-Optic
Q-Switch

Output Coupler

## Fig. 26

14

13

5

1

3

5

9

5

Fig. 27

Fig. 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3640887 A
- US 3897358 A
- US 4902127 A
- US 5172263 A
- US 5615043 A
- US 5751472 A
- US 5872804 A
- EP 1180832 A
- US 3665335 A

**Non-patent literature cited in the description**

- Optical properties and laser characteristics of highly Nd3+-doped Y3Al5O12 ceramics. *Applied Physics Letters,* 2000, vol. 77 (7), 939-941
- 72W NO: Y3Al5O12 ceramic laser. *Applied Physics Letters,* 2001, vol. 78 (23), 3586-3588
- Diode-pumped High-power CW and Mode-locked Nd:YLF Laser. Advanced Solid-State Lasers. Optical Society of America, 2000, vol. 34
- **Roth U et al.** Saturation, Gain, and Noise Properties of a Multipass Diode-Laser-Pumped Nd:YAG CW Amplifier. *IEEE JOURNAL OF QUANTUM ELECTRONICS,* October 1998, vol. 34 (10